(19) Europäisches Patentamt
European Patent Office
Office européen des brevets

(11) EP 0 651 150 B1

(12) EUROPEAN PATENT SPECIFICATION

(45) Date of publication and mention
of the grant of the patent:
07.01.1999 Bulletin 1999/01

(51) Int Cl.⁶: **F02D 41/38**, F02D 41/40

(21) Application number: 94117178.7

(22) Date of filing: 31.10.1994

(54) **Fuel injection apparatus for engine**

Kraftstoffeinspritzgerät für Brennkraftmaschine

Dispositif d'injection de carburant pour moteur

(84) Designated Contracting States:
DE FR GB

(30) Priority: 02.11.1993 JP 274666/93
07.01.1994 JP 617/94

(43) Date of publication of application:
03.05.1995 Bulletin 1995/18

(73) Proprietors:
• TOYOTA JIDOSHA KABUSHIKI KAISHA
Aichi-ken (JP)
• DENSO CORPORATION
Kariya-City Aichi-Pref. 448 (JP)

(72) Inventors:
• Shindoh, Kenichiro
Susono-shi, Shizuoka-ken, 410-11 (JP)
• Yamanaka, Akihiro
Susono-shi, Shizuoka-ken, 410-11 (JP)
• Hirose, Katsuhiko
Susono-shi, Shizuoka-ken, 410-11 (JP)

• Shibata, Akira
Anjo-shi, Aichi-ken, 446 (JP)
• Inaguma, Yoshitsugu
Oobu-shi, Aichi-ken, 474 (JP)
• Yano, Kenzo
Okazaki-shi, Aichi-ken, 444 (JP)
• Ichikawa, Tatsuya
Kariya-shi, Aichi-ken, 448 (JP)

(74) Representative: Tiedtke, Harro, Dipl.-Ing.
Patentanwaltsbüro
Tiedtke-Bühling-Kinne & Partner
Bavariaring 4
80336 München (DE)

(56) References cited:
EP-A- 0 585 746          GB-A- 2 098 334
US-A- 4 476 832          US-A- 4 476 837
US-A- 5 107 700

• PATENT ABSTRACTS OF JAPAN vol. 012, no.
182 (M-702), 27 May 1988 & JP-A-62 291453
(NIPPON DENSO CO LTD), 18 December 1987,

## Description

The present invention relates to a fuel injection apparatus according to the preamble of claim 1.

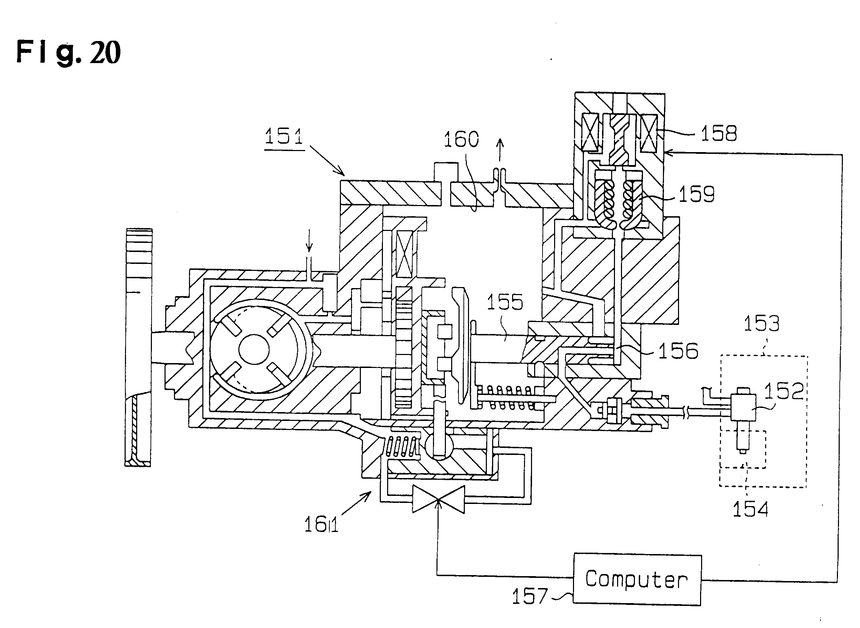

Two of the main components in conventional fuel injection systems used in diesel and other types of engines are a fuel injection pump 151 and injection nozzles 152 as shown in Fig. 20. Each injection nozzle 152 operates to inject fuel, supplied under high pressure by the injection pump 151, into a combustion chamber 154 of an engine 153. The amount of fuel injected into the combustion chamber 154 is variously controlled by fuel injection timing according to changing engine operating parameters. The fuel injection apparatus used in the electronically controlled diesel engine, for example, utilizes a fuel pump 151 activated by a plunger 155 to compress fuel in a high pressure chamber 165 inside the pump 151. The high-pressure fuel is then fed to the injection nozzle 152 from which it is injected into the combustion chamber 154.

A computer 157 or other type of electronic device typically controls the injection pump 151. The computer 157 or electronic device first computes a desired or target value of fuel to be injected in the engine 153 based on detected engine operating conditions. Then, based on the computed target value, the computer 157 controls an electromagnetic coil 158 provided in the injection pump 151 to open a spill valve 159 (or a spill ring in other pump types). Next, the high pressure chamber 156 opens to a fuel chamber 160 allowing fuel to spill into the fuel chamber 160 from the high pressure chamber 156. The amount of fuel supplied during any single injection operation depends directly on the time which the injector pump 151 begins and ends its supply of pressurized fuel to the injection nozzle 152 and combustion chamber 154.

The computer 157 accomplishes this by computing a target value for injection timing in accordance with various engine operating conditions. The computed target value is then used by the computer 157 to control a timer device 161 provided in the injection pump 151, which in turn, controls the movement of the plunger 155. In this way, the computer 157 controls the action of the plunger 155 to begin the supply of pressurized fuel from the injection pump 151 to the injection nozzle 152, and ultimately, to the combustion chamber 154.

Even with such electronically precise control over the timing and amount of fuel injection, time dependent mechanical changes as well as changes in fuel characteristics tend to compromise the performance of fuel injection control. Instances of this occur given variations in fuel viscosity and mechanical component part degradation. In particular, when the temperature of fuel fluctuates, fuel viscosity undergoes a significant change. This change directly effects fuel injection. In addition, over long periods of time, the component parts of the fuel injector will normally degrade or show signs of wear. Unless these factors are considered in the timing control of the fuel injection, the actual amount of fuel injected and its timing will inevitably vary from desired target values. These factors, in turn, compromise engine emissions, e.g., increasing the amounts of nitrogen oxides (NOx) and other harmful compounds exhausted from the engine 153.

Japanese Unexamined Patent Publication No. 62-291453 proposes a simple structure to control the amount of fuel injected by an injection pump, that accounts for variations in fuel viscosity. In this apparatus, a hydraulic timer has a hydraulic piston and a cylinder provided in the injection pump. The computer first determines the degree of fuel viscosity based on detected changes in the speed of the reciprocating piston, and then, utilizes the detected fuel viscosity to ultimately adjust the fuel injection control.

According to the control apparatus in the '453 unexamined patent publication, however, fuel viscosity determinations are made irrespective of considerations such as variations in the particular manufacturing tolerance of the piston and cylinder in any given timing apparatus. Likewise, nothing is provided in this fuel injection control system which accounts for the wearing out or the mechanical failure of timing apparatus piston and cylinder. Such failures are often directly dependent on engine speed and load. Consequently, the control apparatus disclosed in the '453 unexamined patent publication is ill-suited to make precise fuel viscosity determinations under various engine speeds and loads. This, in effect, prevents precise fuel injection control.

According to documents EP-A-585 746 (state of the art according to Art 54(3) EPC) and GB-A-2 098 334, there are disclosed fuel injection apparatuses of that kind defined in the preamble of claim 1.

Document EP-A-585 746 particularly describes a pressure sensor detecting the fuel pressure delivered from a fuel pump to each one of nozzles, wherein pressure is detected and pressure differential signals are computed during the injection period. Almost the same method of pressure measurement is described in document GB-A-2 098 334 according to which the injection quantity per injection operation is determined on the basis of injection pressure data. According to this method, a pressure sensor is provided for measuring the fuel pressure during the injection period, wherein pressure fluctuations are filtered out of the pressure signal in order to achieve a pressure curve which can then be evaluated. The first and second derivative of the pressure are detected to control fuel injection.

It is the object of the present invention to provide a fuel injection apparatus providing an optimized fuel injection control.

This object is achieved by means of the combination of the features defined in claim 1. Preferable embodiments of the invention are set forth in the subclaims.

In the following the invention is further illustrated by embodiments with reference to the accompanying drawings, in which

Figs. 1 through 11 illustrate a first embodiment of the present invention adapted for a diesel engine system equipped with a booster.

Fig. 1 is a diagram illustrating the schematic structure of an engine system;

Fig. 2 is a cross-sectional view showing a distribution type fuel injection pump;

Fig. 3 is a block diagram illustrating an electronic control unit (ECU) used as part of a fuel injection control system;

Fig. 4 is a flowchart illustrating a "counting routine" that is executed by the ECU;

Fig. 5 is a flowchart illustrating a "fuel bulk modulus computing routine" that is executed as part of fuel injection control performed by the ECU;

Fig. 6 is a continuation of the flowchart illustrated in Fig. 5;

Fig. 7 is a flowchart illustrating a "fuel injection control routine" executed by the ECU;

Figs. 8a-8d are timing charts illustrating the pressure characteristics of the fuel at the time of a single fuel injection, its first derivative value, its second derivative value and a corresponding fuel injection rate, respectively;

Fig. 9 is a timing chart showing behavior of the second derivative value of the fuel pressure;

Fig. 10 is a graph illustrating the relation between fuel bulk modulus and the time at which fuel injection timing begins; and

Fig. 11 is a graph illustrating the relation between fuel bulk modulus and the amount of fuel injected by the fuel injector.

Figs. 12 through 16 illustrate a second embodiment of the present invention as adapted also for a diesel engine system equipped with a booster.

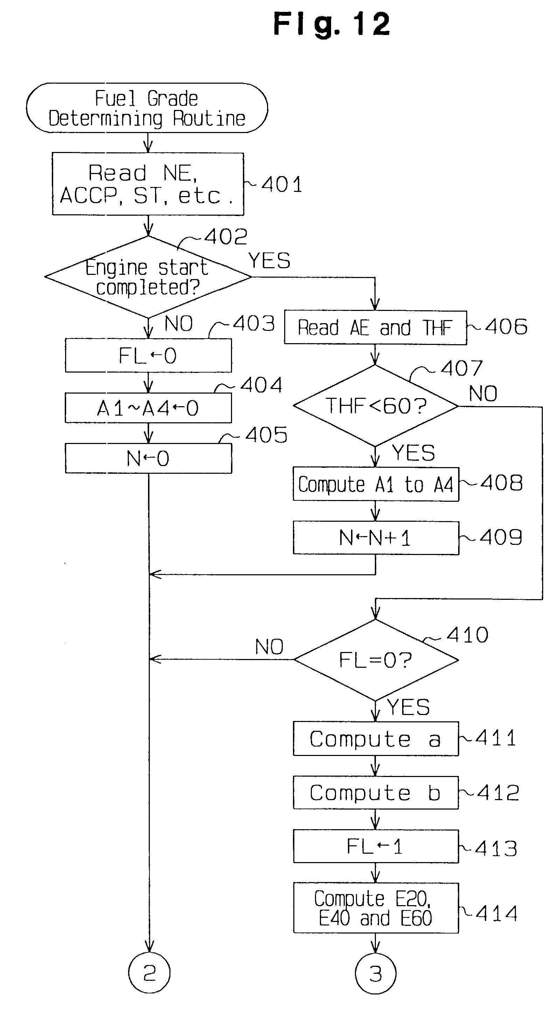

Fig. 12 is a flowchart illustrating a "fuel grade determining routine" executed by the ECU;

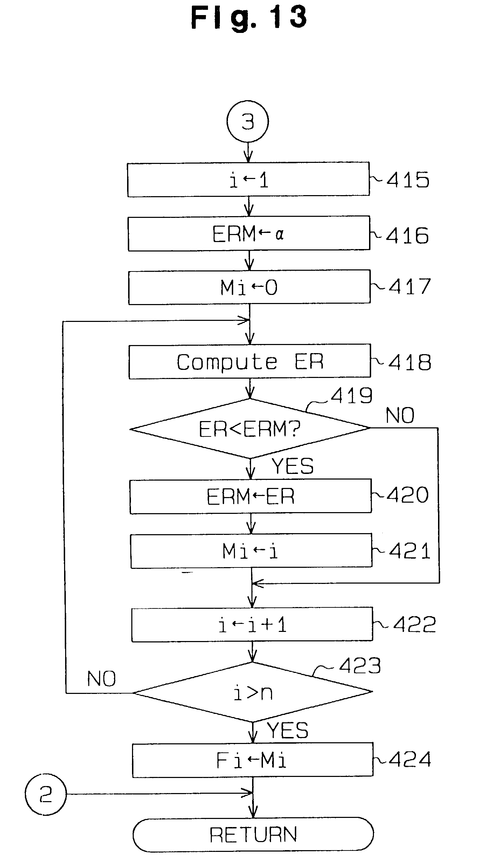

Fig. 13 is a continuation of the "fuel grade determining routine" illustrated in Fig. 12;

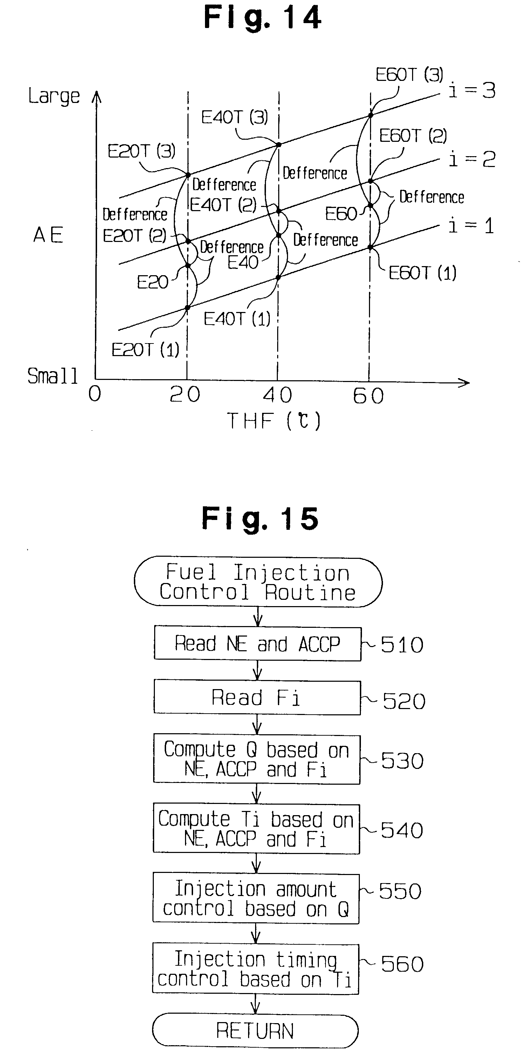

Fig. 14 is a graph explaining a method of predicting a fuel grade from the relation between the fuel temperature and the fuel bulk modulus;

Fig. 15 is a flowchart illustrating a "fuel injection control routine" executed by the ECU; and

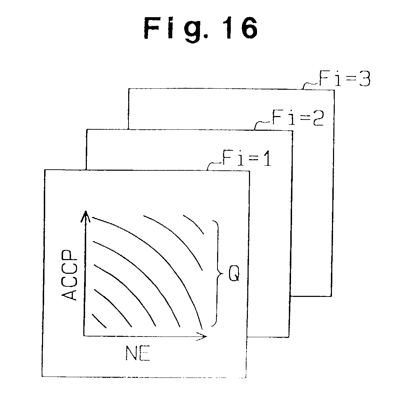

Fig. 16 is a graph showing the relation of a target injection amount set for each fuel grade with the engine speed and acceleration pedal angle.

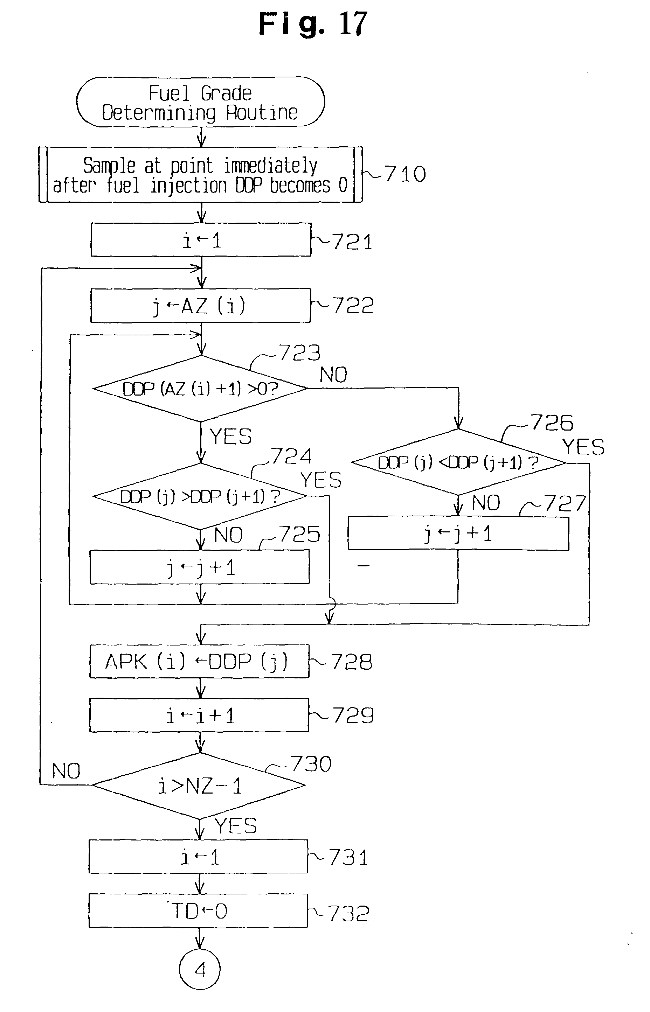

Figs. 17 through 19 illustrate a third embodiment of the present invention as adapted for a diesel engine system equipped with a booster.

Fig. 17 is a flowchart illustrating a "fuel grade determining routine" executed by the ECU;

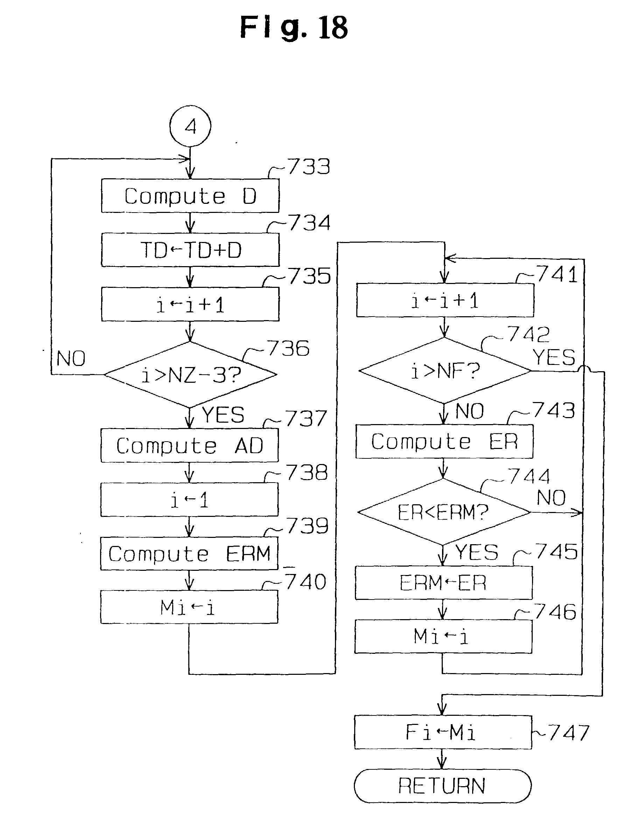

Fig. 18 is a continuation of the routine illustrated in Fig. 17; and

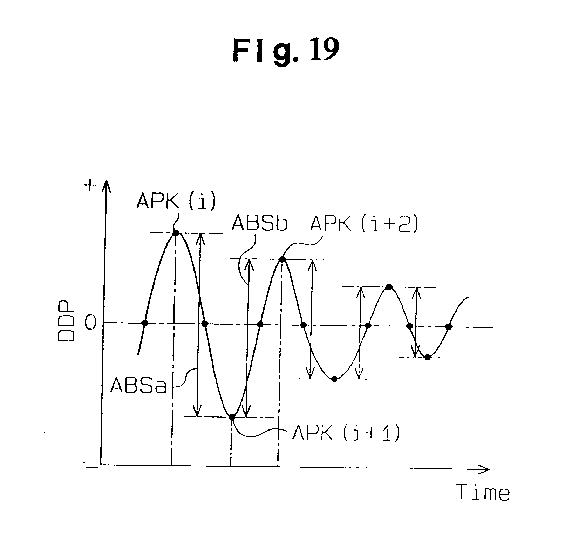

Fig. 19 is a timing chart illustrating the behavior of the second derivative of the fuel pressure.

Fig. 20 is a cross-sectional view showing a conventional fuel injection pump, etc.

Fuel injection apparatuses for an engine according to embodiments of the present invention will be described below. The basic mechanical and electrical structures of the fuel injection apparatus for an engine embodying this invention will be discussed in the section of the first embodiment. With regard to the basic structures, only those different from the basic structures of the first embodiment will be discussed in the sections of the second to seventh embodiments.

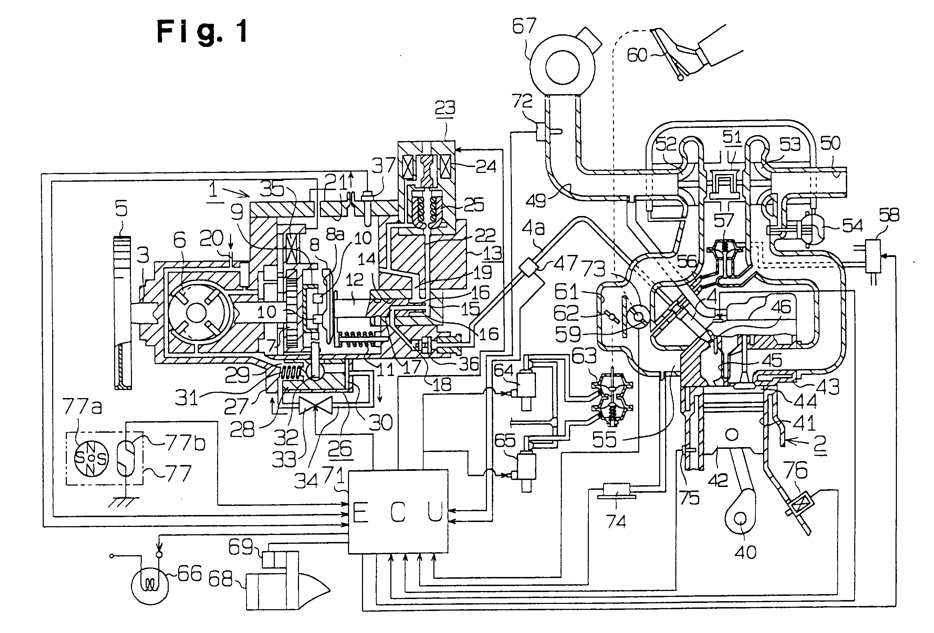

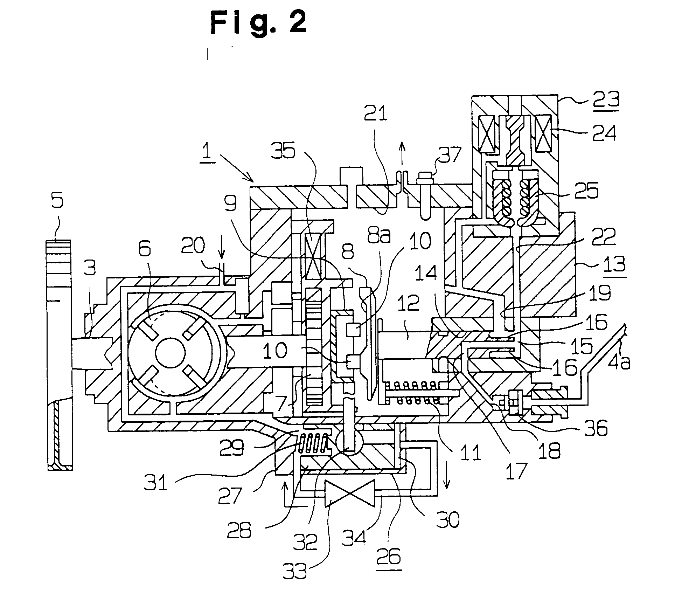

Fig. 1 illustrates the schematic of a diesel engine system equipped with a booster, while Fig. 2 is an enlargement of the distribution type fuel injection pump shown in Fig. 1. The diesel engine system according to this embodiment comprises a diesel engine coupled to the power transmission device of an automobile and a fuel injection pump 1 for supplying high-pressure fuel to the engine 2. The engine 2 has a plurality of cylinders (four in this embodiment). A plurality of fuel injection nozzles 4 provided in the respective cylinders receive the fuel fed under pressure from the fuel injection pump 1 via passages or fuel lines 4a. The fuel injection pump 1 has a drive shaft 3. A drive pulley 5 fixed to the left-hand end (distal end) of the drive shaft 3 in the diagram receives power transmitted via a belt or the like (not shown) from a crankshaft 40 of the engine 2. As the engine 2 is driven, the shaft 3 rotates to drive the injection pump 1 so that the pump 1 feeds fuel under pressure to each injection nozzles 4 of the engine 2 via the fuel line 4a.

In this embodiment, each injection nozzle 4 incorporates a needle valve and a spring for adjusting the opening of the needle valve. The needle valve opens upon reception of a fuel pressure P equal to or higher than a predetermined value. When the fuel pressure P reaches or exceeds the predetermined value, that pressure is applied to each injection nozzle 4 by the injection pump 1. The injection nozzle 4 then injects fuel to the associated cylinder.

A low pressure fuel transfer pump 6 (shown rotated by 90 degrees in this diagram) provided in the injection pump 1 comprises a Bene type pump which receives power from the shaft 3. A pulsar 7 provided at the right-hand end (proximal end) of the shaft 3 in the diagram has a disk shape and has a plurality of projections forming teeth on its outer surface (56 projections in this embodiment). This pulsar 7 has a plurality of cut teeth, here four sets for a total of eight teeth in this embodiment, arranged at equal angular intervals on its outer surface in association with the number of cylinders of the engine 2. The pulsar 7 has 14 projections arranged at equal angular intervals between the plural sets of cut teeth.

The proximal end of the shaft 3 is connected to a cam plate 8 via a coupling (not shown). The dish shaped cam plate 8 has cam faces 8a on one side. A roller ring 9, provided between the pulsar 7 and the cam plate 8, has a plurality of cam rollers 10 facing the cam faces 8a and arranged in a circumferential direction. The number of the cam faces 8a equal the number of the cylinders of the engine 2. A spring 11, provided adjacent to the cam plate 8, urges this plate 8 in the direction for engagement with the cam rollers 10.

A plunger 12 attached to the cam plate 8 serves to compress the fuel. The cam plate 8 and the plunger 12 rotate together with the rotation of the shaft 3. More specifically, when the rotational moment of the shaft 3 is transmitted to the cam plate 8 via the coupling, the plate 8 rotates while engaged with the cam rollers 10. Both the cam plate 8 and the plunger 12 undergo revolving and reciprocating movement, with reciprocation being performed in the horizontal direction, referring to Fig. 2. The number of times the cam plate 8 and plunger 12 reciprocate depends on the number of cylinders in the engine 2. The plunger 12 moves forward while the cam faces 8a moves over the cam rollers 10 of the roller ring 9, and the plunger 12 moves backward while the cam faces 8a moves under the cam rollers 10.

A pump housing 13 of the injection pump 1 houses a cylinder 14 assembled to the plunger 12. A high pressure chamber 15 is defined in the cylinder 14 between the left-hand end (distal end face) of the plunger 12 in the diagram and the bottom face of the cylinder 14. The plunger 12 has suction grooves 16, equal in number to the cylinders of the engine, and a distributing port 17 on the outer surface on the distal end side. This housing 13 has distribution passages 18 and a suction port 19 which are associated with the suction grooves 16 and the distribution port 17.

In this embodiment, a delivery valve 36 provided on the outlet side of each distribution passage 18 is a constant pressure valve (CPV). This valve 36 prevents the counterflow of the fuel, fed under pressure to the fuel line 4a, along each distribution passage 18, and opens the passage 18 when the fuel pressure P reaches a predetermined value or higher.

In response to the rotation of the shaft 3 fuel, supplied from a fuel tank (not shown) enters the transfer pump via supply port 20. The fuel next enters a fuel chamber 21 from the transfer pump 6. During the backward movement of the plunger 12, i.e., during the suction stroke, the suction grooves 16 communicate with the suction port 19, the high pressure chamber 15 is de-pressurized and fuel is supplied to the high pressure chamber 15 from the fuel chamber 21. In the compression stroke in which the high pressure chamber 15 is pressurized in accordance with the forward movement of the plunger 12, the fuel is supplied under pressure to each injection nozzle 4 of the associated cylinder via the associated fuel line 4a from the associated distribution passage 18.

A spill passage 22 provided between the high pressure chamber 15 and the fuel chamber 21 in the housing 13 permits fuel spillage from the high pressure chamber 15 to the fuel chamber 21. An electromagnetic spill valve 23 provided midway in this spill passage 22 regulates fuel spillage from the high pressure chamber 15. This spill valve 23, which is normally open, has a valve body 25 that opens the spill passage 22 when a coil 24 is deenergized, causing the fuel in the high pressure chamber 15 to spill into the fuel chamber 21. On the other hand, when the coil 24 is energized, the valve body 25 closes the spill passage 22 to block fuel spillage into the fuel chamber 21 from the high pressure chamber 15.

The energization of the electromagnetic spill valve 23, therefore, controls the opening and closing of the spill passage 22 by this valve 23, and in turn regulates the fuel spillage into the fuel chamber 21 from the high pressure chamber 15. When the electromagnetic spill valve 23 opens the spill passage 22 in the compression stroke of the plunger 12, the high pressure chamber 15 is de-pressurized, stopping the injection of the fuel from each injection nozzle 4. Even though the plunger 12 moves forward when the spill passage 22 is opened by the electromagnetic spill valve 23, fuel pressure in the high pressure chamber 15 will not increase preventing any fuel from being injected from the injection nozzles 4. Due to the control of the electromagnetic spill valve 23 over the opening the spill passage 22, during the forward movement of the plunger 12, adjustment can thereby be made to the timing when fuel injection from the injection nozzles 4 should end. This directly controls the amount of fuel injected through the injection nozzles 4.

A timer apparatus 26 (shown rotated by 90 degrees in this diagram) provided at the bottom side of the housing 13 controls the timing for ending fuel injection from each injection nozzle 4 to the lead angle side or the delay angle side. This timer apparatus 26 changes the rotational phase of the roller ring 9 with respect to the rotational direction of the shaft 3. This changes the timing at which the cam faces 8a start engaging the associated cam rollers 10. That is, timer 26 changes the timing at which the plunger 12 starts moving forward.

The timer apparatus 26, which is driven hydraulically, has a timer housing 27 and a timer piston 28 assembled inside the housing 27. The spaces corresponding to both ends of the piston 28 in the housing 27 are a low pressure chamber 29 and a pressurizing chamber 30. A timer spring 31 provided in the low pressure chamber 29 urges the piston 28 toward the pressurizing chamber 30. A slide pin 32, extending upward from the piston 28, couples the piston 28 to the roller ring 9. As the slide pin 32 pivots or tilts due to the movement of the piston 28, the roller ring 9 rotates.

The fuel compressed by the low pressure fuel transfer pump 6 is supplied to the pressurizing chamber 30. The equilibrium maintained between the fuel pressure in the pressurizing chamber 30 and the urging force of the spring, controls the time at which the plunger 12 reciprocates, which in turn controls fuel injection timing.

Specifically, the time at which cam plate 8 contacts the rollers of roller ring 9 is determined by the rotational position of the roller rings 9. With the rings at one position, the revolving cam plate 8 makes contact with the roller rings 9 at a given time. Changing the rotation position of the ring 9, changes the time at which the cam plate 8 contacts the rings 9. Therefore, when the position of plunger 12 changes, the pivotal movement of slide pin 32 causes the rotation of roller ring 9, thus changing the timing at which the cam plate 9 contacts the ring 9. This in turn regulates the timing of the reciprocating movement of piston 12, and hence that of the fuel injection timing.

The timer apparatus 26 uses the fuel pressure as hydraulic pressure to operate the injection pump 1. An electromagnetic time control valve (TCV) 33 provided in the timer apparatus 26 adjusts the fuel pressure. A communication passage 34 provided between the pressurizing chamber 30 and the low pressure chamber 29 connects chambers 30 and 29. The TCV 33, provided midway in the communication passage 34, acts based on a duty ratio controlled energization signal (not shown). As the TCV 33 adjusts the opening of the communication passage 34, the fuel pressure in the pressurizing chamber 30 is also adjusted. This in turn further controls the time at which the plunger 12 starts moving forward, and in effect controls the beginning of a particular fuel injection timing cycle.

An engine speed sensor 35 provided above the roller ring 9 comprises an electromagnetic pickup and faces the outer surface of the pulsar 7. When the projections and cut teeth of the pulsar 7 cross close to the sensor 35, the sensor 35 detects the passing of the projections and cut teeth and outputs a pulse signal representing the detection. This sensor 35 outputs an engine speed pulse signal every given crank angle. Based on the passing of the cut teeth, the sensor 35 outputs a pulse signal indicating a reference position for every given crank angle. Further, the sensor 35 outputs a series of engine speed pulse signals to obtain the engine speed NE. As the sensor 35 is provided integrally with the roller ring 9, it can provide a reference engine speed pulse signal at the constant timing with respect to the movement of the plunger 12, even if the rotational position of the roller ring 9 is changed by the timer apparatus 26.

In addition, a fuel temperature sensor 37 provided in the housing 13 detects the temperature THF of the fuel retained in the fun chamber 21.

The structure of the diesel engine 2 will be described with reference to Fig. 1. This engine 2 has cylinder bores 41, pistons 42 and a cylinder head 43, which define a plurality of main combustion chambers 44 associated with the individual cylinders. A plurality of sub-combustion chambers 45 formed in the cylinder head 43 are connected to the respective main combustion chambers 44. Fuel is injected into each sub-combustion chamber 45 from the associated injection nozzle 4. Glow plugs 46 provided in association with the individual sub-combustion chambers 45 constitute a device for helping start the engine 2.

In this embodiment, a pressure sensor 47 provided in each passage or fuel line 4a detects the fuel pressure P between the injection pump 1 and each injection nozzle 4, and outputs a signal corresponding to the level of the detected value.

An air-intake passage 49 and an exhaust passage 50 provided in the engine 2 are connected to the individual cylinders. A compressor 52 provided in the air-intake passage 49 and a turbine 53 provided in the exhaust passage 50 constitute a turbo charger 51 as a booster. A waste gate valve 54 provided in the exhaust passage 50 regulates the amount of the exhaust gas flowing into the turbine 53. It is well known that the turbo charger 51 uses exhaust gas energy to rotate the turbine 53 and the compressor 52 provided on a shaft to boost air intake. As the pressure of the intake air increases, high density air is sent to the main combustion chambers 44. A good portion of the fuel injected in each main combustion chamber 44 from the associated sub-combustion chamber 45 is burned by the high density air, increasing the output of the engine 2. As the angle of the waste gate valve 54 is adjusted, the pressure of the intake air obtained by the turbo charger 51 or turbo-boost pressure is also adjusted.

An exhaust gas recirculation passage (EGR passage) 56 provided between the air-intake passage 49 and the exhaust passage 50 recirculates part of the exhaust gas flowing in the exhaust passage 50, to the vicinity of an exhaust port 55. An EGR valve 57 provided midway in the EGR passage 56 and actuated on the basis of the negative pressure, adjusts the amount of recirculated exhaust gas (EGR amount). An electric vacuum regulating valve (EVRV) 58 regulates the supply of the negative pressure to the EGR valve 57. As the EGR valve 57 is driven based on the negative pressure adjusted by the EVRV 58, the EGR amount flowing to the suction port 55 via the EGR passage 56 from the exhaust passage 50 is adjusted.

A throttle valve 59, provided midway in the air-intake passage 49, operates in response to the thrusting of an acceleration pedal 60. A bypass passage 61 located by the throttle valve 55 in the air-intake passage 49 provides a bypass for the flow of the intake air. A bypass restriction valve 62 provided in this passage 61 is actuated by driving an actuator 63 of a double diaphragm chamber type. The energization of two vacuum switching valves (VSVs) 64 and 65 is controlled to drive this actuator 63. For example, this bypass restriction valve 62 is controlled to be half open to reduce the vibration noise or the like when the engine 2 is idling. This bypass restriction valve 62 is opened fully under the normal driving conditions and is fully closed stopping the engine 2 when driving is halted.

An alarm lamp 66 provided proximate to the driver's seat (not shown) in an automobile is lit to inform the driver of the deterioration of the fuel injection apparatus including the injection pump 1 and the injection nozzles 4. This alarm lamp 66 is activated based on the detection of an abnormality in fuel injection, which will be discussed later.

An electronic control unit (ECU) 71, performs engine system control over the aforementioned electromagnetic spill valve 23, TCV 33, glow plugs 46, EVRV 58, VSVs 64 and 65 and alarm lamp 66 in this embodiment.

In addition to the aforementioned engine speed sensor 35, there are various other sensors (which will be discussed shortly) to detect various parameters concerning the driving conditions of the engine 2. An air temperature sensor 72, provided near an air cleaner 67 at the inlet of the air-intake passage 49, detects the temperature, THA, of air fed into the air-intake passage 49 (air temperature) and outputs a signal corresponding to the detected value. An acceleration pedal sensor 73, provided near the throttle valve 59, detects the acceleration pedal angle ACCP (corresponding to the load state of the engine 2), and outputs a signal corresponding to the detected value. A manifold pressure sensor 74, provided near the suction port 55, detects the pressure, PiM, of the intake air boosted by the turbo charger 51 (boosted turbo pressure), and outputs a signal corresponding to the detected value. A coolant temperature sensor 75, provided in the engine 2, detects the temperature, THW, of the coolant of the engine 2 (coolant temperature) and outputs a signal corresponding to the detected value. A crank angle sensor 76, provided in the engine 2, detects the rotational position of the crankshaft 40, such as for example, the top dead center of a specific cylinder, and outputs a signal corresponding to the detected value. Further, a vehicle speed sensor 77 provided in a transmission (not shown) detects a vehicle speed SPD. This sensor 77 has a magnet 77a that is rotated by the drive shaft of the transmission, and outputs a pulse signal corresponding to the vehicle speed SPD when a lead switch 77b is periodically enabled by the magnet 77a.

A starter 68 provided in the engine 2 rotates or cranks the crankshaft 40 at engine ignition. The starter 68 has a starter switch 69 to detect the ON/OFF status of the starter 68. As is well known, the starter 68 is turned on or off based on the manipulation of an ignition switch (not shown). At the time the starter 48 is actuated by the manipulation of the ignition switch, the starter switch 69 outputs a starter signal ST indicating the ON status.

The ECU 71 receives various signals from the aforementioned various sensors 35, 37, 47, and 72 to 77 and the switch 69, and controls the electromagnetic spill valve 23, TCV 33, glow plugs 46, EVRV 58 and VSVs 64 and 65, alarm lamp 66 and so forth based on the received signals.

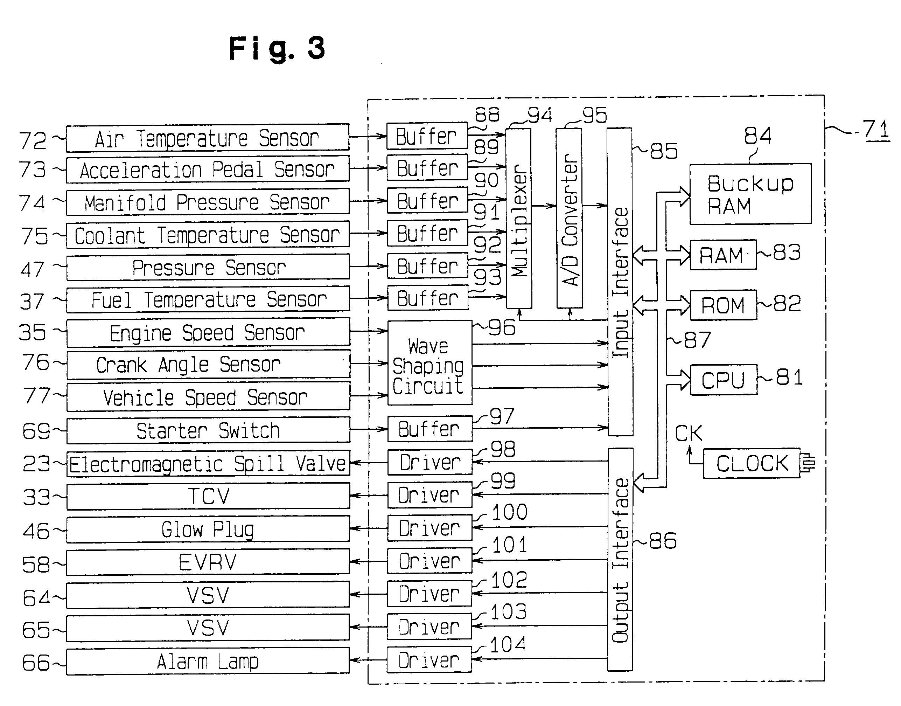

The structure of the ECU 71 will be described below with reference to the block diagram in Fig. 3. The ECU 71 includes a central processing unit (CPU) 81, a read only memory (ROM) 82, a random access memory (RAM) 83, and a backup RAM 84. Stored in advance in the ROM 82 are predetermined control programs, maps, etc. The RAM 83 temporarily stores the results of operations performed by the CPU 81. The backup RAM 84 saves temporarily stored data. The ECU 71 is a network of transistors, capacitors, resistors and other electronic components which perform logical operations based on the aforementioned signals. Individual components 81-84 of the ECU are connected to an input interface 85 and an output interface 86 by a bus 87.

Various signals output from the aforementioned air temperature sensor 72, acceleration pedal sensor 73, manifold pressure sensor 74, coolant temperature sensor 75, pressure sensors 47 and fuel temperature sensor 37 are input to the input interface 85 via individual buffers 88, 89, 90, 91, 92 and 93, a multiplexer 94 and an A/D converter 95. Various signals output from the aforementioned engine speed sensor 35, crank angle sensor 76 and vehicle speed sensor 77 are input to the input interface 85 via a wave shaping circuit 96. A signal output from the starter switch 69 is input to the input interface 85 via a buffer 97. The CPU 81 reads the various signals input to the input interface 85 as input values, and performs desired processes, such as computations, to control the electromagnetic spill valve 23, TCV 33, glow plugs 46, EVRV 58, VSVs 64 and 65, alarm lamp 66, etc. For instance, the CPU 81 executes various operations associated with fuel injection control or other controls, which will be discussed later. Further, the CPU 81 outputs control signals according to the processing results to the individual components 23, 33, 46, 58, and 64-66 via individual drivers 98, 99, 100, 101, 102, 103, and 104.

In this embodiment, the CPU 81 also serves as a counter. Although the glow plugs 46 and pressure sensors 47 are provided for the respective cylinders, only one plug and one pressure sensor are illustrated in Fig. 3.

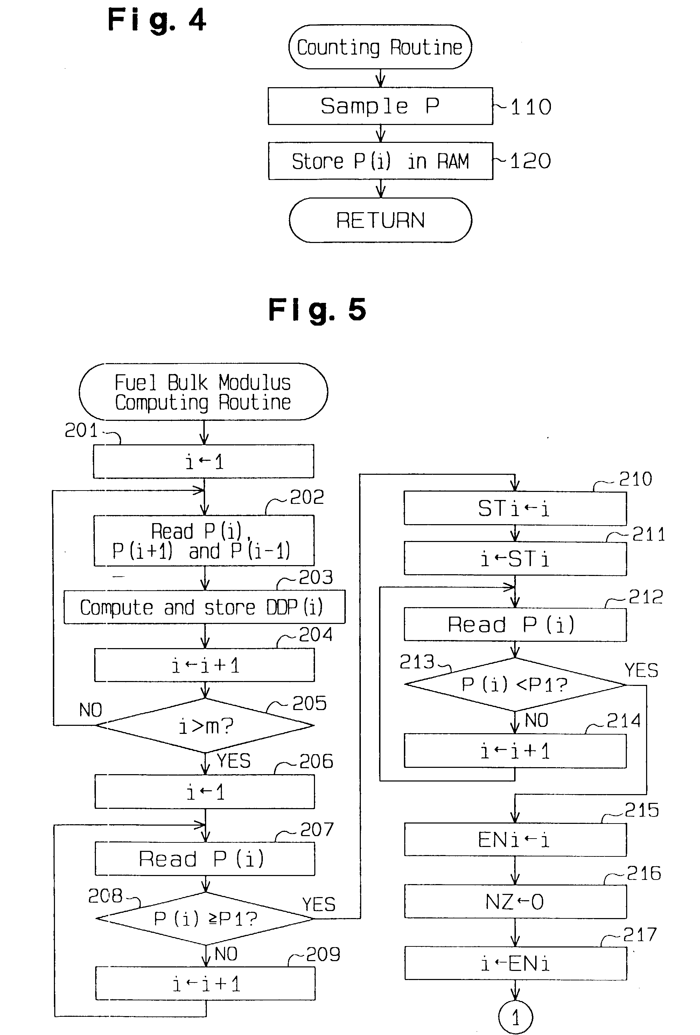

Execution of fuel injection control by the ECU 71 will now be described with reference to Figs. 4 to 11.

Fig. 4 presents the flowchart which illustrates the contents of a counting routine executed by the ECU 71. In this embodiment, the CPU 81 increments first count data i by "1" based on its counter function. In this embodiment i is a function of time. The ECU 71 executes this routine every time the data i is incremented. The data i here is incremented at a predetermined interval of "20 $\mu$s", "40 $\mu$s" or the like. For instance, the data i is temporarily reset and incremented every time pressured fuel is supplied to the injection nozzle 4 from the injection pump 1.

When the ECU 71 performs the counting routine, the ECU 71 samples the value of the fuel pressure P based on the signal from the pressure sensor 47 at step 110. At step 120, the ECU 71 sequentially stores the value of the currently sampled fuel pressure P in the RAM 83 as a fuel pressure P(i) corresponding to the value of the data i, and next, temporarily terminates the subsequent processing.

According to this routine, every time single fuel injection to the engine 2 is executed, the value of the fuel pressure P(i) corresponding to the data i then is sequentially stored in the RAM 83 as computation data.

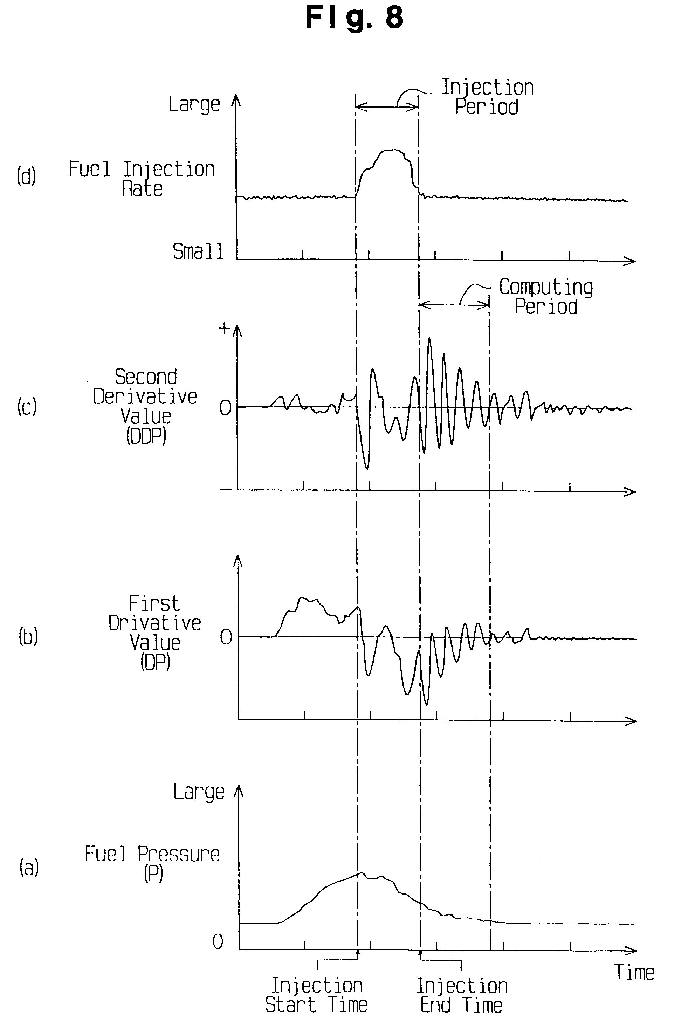

Figs. 8a-8c are graphs illustrating the change in fuel pressure over the period of a single fuel injection cycle, as well as its first and second derivatives DP and DDP respectively. Fig 8d is a graph of the change in fuel injection rate over the same period. As is apparent from the behaviors of the first and second derivatives, the value of the fuel pressure P varies according to a simple damped sinusoid. In particular, it is known that after the fuel injection is terminated, variations in the amplitude of the first and second derivatives DP and DDP gradually attenuate and to converge to "0". Careful detection and attention to changing fuel pressure harmonics provides valuable insight into fuel characteristics such as fuel viscosity.

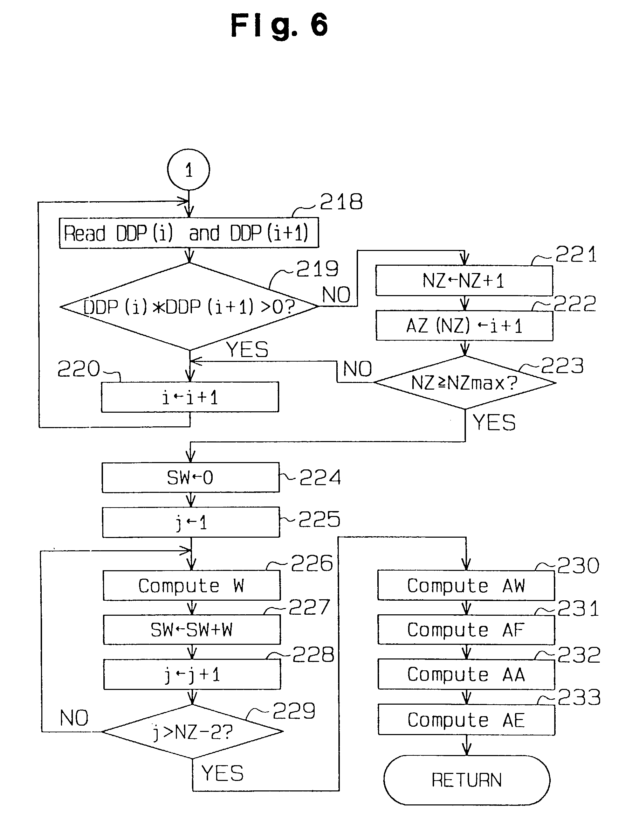

Figs. 5 and 6 are flowcharts which illustrate the steps of a "fuel bulk modulus computing routine" executed by the ECU 71.

When the ECU 71 enters this routine, the ECU 71 at step 201 initializes count data i to "1". This data corresponds to the value of the fuel pressure P(i), stored in RAM 83 at the time of the previous fuel injection.

Subsequently, the ECU 71 reads, values for the fuel pressures P(i), P(i+1) and P(i-1) previously stored in RAM 83. Based on these values of P(i), P(i+1) and P(i-1), the ECU 71 computes a second derivative value DDP(i) and stores the result of the computation in the RAM 83 at step 203. The ECU 71 computes the second derivative value DDP(i) from the following equation (1):

$$DDP(i) = \{P(i+1) - P(i)\} - \{P(i) - P(i-1)\} \tag{1}$$

At the next step 204, the ECU 71 increments the data i by "1". The ECU 71 determines whether or not the currently incremented data i is greater than a predetermined maximum value m. This maximum value m corresponds to the number of total samplings with respect to the second derivative value DDP(i). When the data i is equal to or smaller than the maximum value m, the ECU 71 jumps to step 202 to repeat the sequence of processes at steps 202 to 205. When the data i is greater than the maximum value m, the ECU 71 proceeds to step 206.

The ECU 71 initializes the data i to "1" again at step 206, and reads the value of the fuel pressure P(i) corresponding to the data i then from the RAM 83 at step 207.

At step 208, the ECU 71 determines if the value of the currently read fuel pressure P(i) is equal to or greater than a predetermined reference value P1. This reference value P1 corresponds to the value of the pressure at which the injection nozzle 4 injects fuel to the engine's combustion chamber 44. When the value of the fuel pressure P(i) is smaller than the reference value P1, that is, when the fuel pressure P(i) has not yet increased to a value necessary to start fuel injection, the ECU 71 moves to step 209. After incrementing the data i by "1" at step 209, the ECU 71 returns to step 207 to execute the sequence of processes starting with this step 207 again. When the value of the fuel pressure P(i) is equal to or greater than the reference value P1, that is, when the fuel pressure P(i) is sufficient to allow fuel injection, the ECU 71 moves to step 210.

At step 210, the ECU 71 then sets data i as a rough prediction of the time STi to start fuel injection. At the subsequent step 211, the ECU 71 sets the time value STi as a reference value of the data i, and continues incrementing the subsequent data i.

At the next step 212, the ECU 71 reads the value of the fuel pressure P(i) corresponding to the data i after the rough injection start time STi, from the RAM 83. At step 213, the ECU 71 determines if the value of the currently read fuel pressure P(i) is equal to or smaller than the aforementioned reference value P1. When the value of the fuel pressure P(i) is equal to or greater than the reference value P1, that is, when the fuel pressure P(i) is still sufficient to continue fuel injection, the ECU 71 moves to step 214. After incrementing the data i by "1" at step 214, the ECU 71 jumps to step 212 again. When the value of the fuel pressure P(i) is smaller than the reference value P1, that is, when the fuel pressure P(i) has dropped sufficiently to the level to end fuel injection, the ECU 71 moves to step 215.

At step 215, the ECU 71 then sets the data i as the approximate predicted time for fuel injection to end, or injection end time ENi. Then, the ECU 71 resets the value of zero count data NZ (to be described later) to "0" at step 216. At the subsequent step 217, the ECU 71 sets the rough injection end time ENi as one reference time for the data i, and continues incrementing the subsequent data i.

At step 218, after determining the approximate injection end time ENi, the ECU 71 reads the value of a second derivative value DDP(i) and a second derivative value DDP(i+1) from the RAM 83.

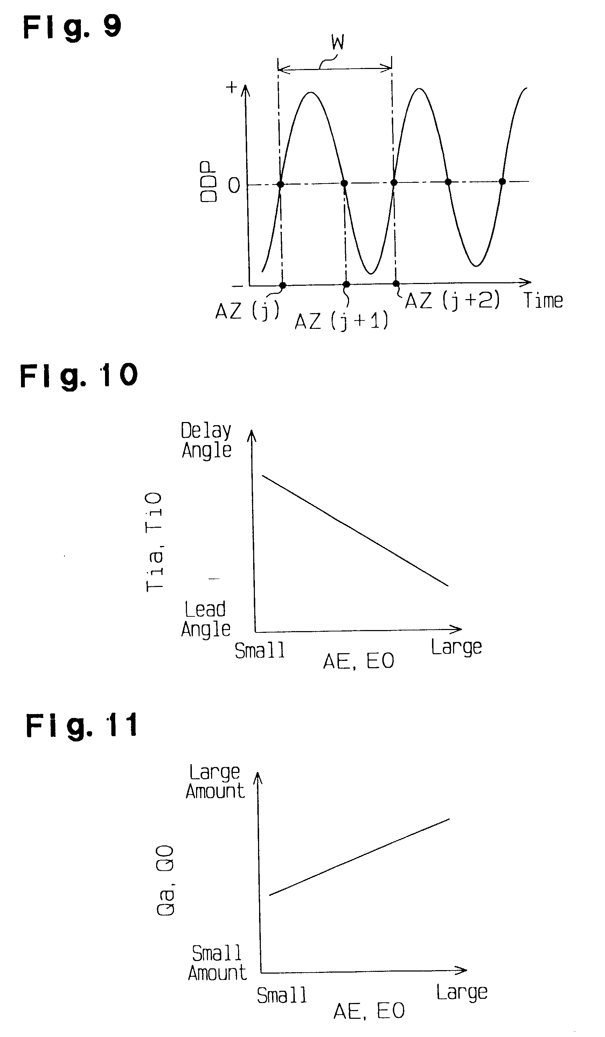

Next, the ECU 71 determines if the result of multiplying two second derivative values DDP(i) and DDP(i+1) is greater than "0" at step 219. This determination is possible given that the value of the second derivative value DDP fluctuates to the positive side and negative side around "0" as shown in Fig. 9. The ECU 71 determines if the value of the second derivative value DDP changes its polarity around "0". When the result of the multiplication is greater than "0", which means that the polarity of the second derivative value DDP(i) has not changed or that the second derivative value DDP(i) has not crossed "0", the ECU 71 proceeds to step 220. After incrementing the data i by "1" at step 220, the ECU 71 jumps to step 218 to execute the processing starting with this step 218 again. When the result of the multiplication is equal to or smaller than "0", which means that the polarity of the second derivative value DDP(i) has changed or that the second derivative value DDP(i) has crossed "0", the ECU 71 proceeds to step 221.

At step 221, the ECU 71 increments the value of the zero point count data NZ by "1". At the subsequent step 222, the ECU 71 sets the data i then plus "1" as the value of a zero point time AZ(NZ) corresponding to the value of the data NZ then.

The ECU 71 determines if the value of the data NZ is equal to or greater than a maximum value NZmax, e.g., "10 to 20" at step 223. When the value of the data NZ is smaller than the maximum value NZmax, the ECU 71 returns to step 220 to repeat the sequence of processes at steps 220 to 223. When the value of the data NZ is equal to or greater than the maximum value NZmax, the ECU 71 goes to step 224.

At step 224, the ECU 71 resets the accumulated value, SW, of the value of the oscillation periodic frequency W which will be discussed later, to "0". Further, the ECU 71 initializes second count data j indicating the timing at which the second derivative value DDP becomes "0" at step 225.

At step 226, the ECU 71 computes the value of the oscillation periodic frequency W. As shown in Fig. 9, this oscillation wavelength W is associated with the fluctuation of the second derivative value DDP. The ECU 71 computes the value of the oscillation wavelength W from the following equation (2):

$$W = AZ(j+2) - AZ(j) \tag{2}$$

As apparent from this equation (2), the period required for the fluctuation of the second derivative value DDP to cross the level of "0" twice in a row is obtained as the oscillation wavelength W based on the zero point time AZ(j) as shown in Fig. 9.

Subsequently, the ECU 71 adds the value of the currently obtained oscillation periodic frequency W to the value of the accumulated value SW and sets the resultant value as a new accumulated value SW at step 227. Further, the ECU 71 increments the data j by "1" at step 228.

At step 229, the ECU determines if the data j is greater than the value of the data NZ minus "2" or the number of times the oscillation frequencies W has been detected. If the value of the data j is equal to or smaller than the number of times the oscillation frequencies W has been detected, the ECU 71 returns to step 226 to repeat the sequence of processes at steps 226 to 229 to further continue the computation of the oscillation periodic frequency W, etc. If the value of the data j is larger than the number of times the oscillation periodic frequency W has been obtained, the ECU 71 proceeds to step 230 to stop the subsequent computation of the oscillation periodic frequency W, etc.

At step 230, the ECU 17 computes an average oscillation periodic frequency AW based on the accumulated value SW from the following equation (3):

$$AW = SW/(NZ - 2) \tag{3}$$

According to this equation (3), the average oscillation periodic frequency AW is obtained by dividing the accumulated value SW by the number of times the oscillation periodic frequency W has been obtained.

At the next step 231, the ECU 17 computes the value of the frequency of pressure fluctuation, AF, based on the average oscillation periodic frequency AW from the following equation (4):

$$AF = 1/(AW * \tau samp) \qquad (4)$$

where $\tau$sam indicates the sampling period (time) for the fuel pressure P(i). According to this equation (4), the reciprocal of the multiplication of the average oscillation periodic frequency AW by the sampling period $\tau$samp as the value of the frequency of pressure fluctuation AF.

Then, at step 232, the ECU 71 computes a propagation speed AA based on the frequency of pressure fluctuation AF from the following equation (5):

$$AA = AF * 2 * L \qquad (5)$$

where L indicates the length of the fuel line 4a. This equation (5) shows that the propagation speed AA is obtained by multiplying the frequency of pressure fluctuation AF by twice the length of the fuel line 4a.

At step 233, the ECU 71 computes the value of a bulk modulus AE based on the propagation speed AA from the following equation (6):

$$AE = (AA)^2 * \rho \qquad (6)$$

where $\rho$ indicates a predetermined fuel density. This equation (6) shows that the bulk modulus AE is the product of the square of the propagation speed AA times the fuel density $\rho$.

The ECU 71 determines the bulk modulus AE in the above manner. The value of this bulk modulus AE is characteristic of fuel viscosity, among other properties, fuel property of the fuel contained in the fuel line 4a between the injection pump 1 and the injection nozzle 4 when fuel injection is executed.

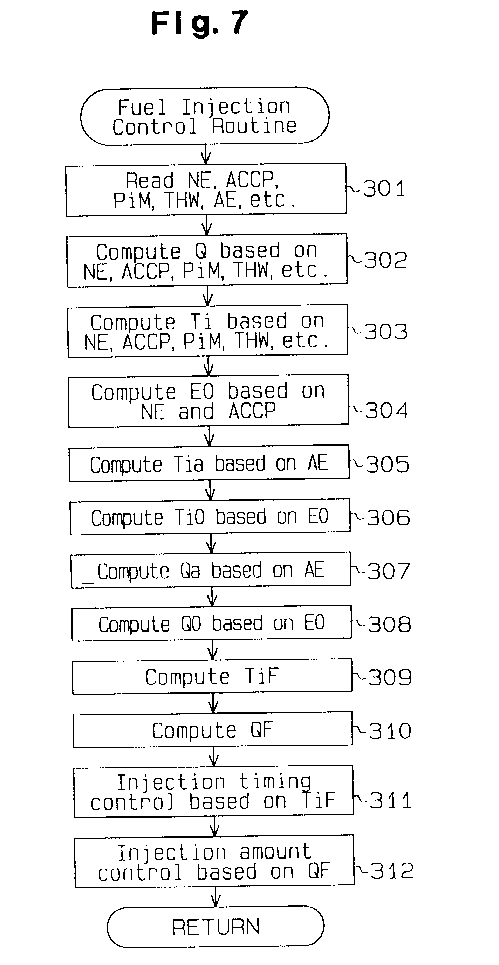

According to this embodiment, the ECU 71 executes the fuel injection control, which will be described later, using the calculated value bulk modulus AE. Fig. 7 presents the flowchart which illustrates the contents of a "fuel injection control routine" the ECU 71 periodically executes.

When the ECU 71 enters this routine, the ECU 71 reads values of the engine speed NE, acceleration pedal angle ACCP, boosted pressure PiM, coolant temperature THW, etc. based on various signals from the individual sensors 35, 73 to 75, etc. at step 301. In addition, the ECU 71 reads the value of the bulk modulus AE obtained in the above-described "fuel bulk modulus computing routine".

At the next step 302, the ECU 71 computes the value of a target injection amount Q according to the current driving condition from a predetermined equation based on the values of the currently read various parameters NE, ACCP, PiM, THW, etc. Since this equation is well known, its description will not be given here.

At step 303, the ECU 71 also computes the value of a target injection timing Ti according to the current driving condition from a predetermined equation based on the values of the currently read various parameters NE, ACCP, PiM, THW, etc. Since this equation is also of a well known type, its description will not be given here.

At step 304, the ECU 71 computes the value of a reference bulk modulus E0 from a predetermined equation based on the values of the currently read parameters NE and ACCP. The description of this equation will be omitted.

Based on the currently read bulk modulus AE, the ECU 71 computes the value of an actual injection start time Tia at step 305. Based on the currently read reference bulk modulus E0, the ECU 71 computes the value of a reference injection start time Ti0 at step 306. The ECU 71 obtains the values of both injection start times Tia and Ti0 by referring to a predetermined map as shown in Fig. 10. In this map, as the values of the volume elasticities AE and E0 increase, the injection start times Tia and Ti0 take values on the lead angle side.

Based on the currently read bulk modulus AE, the ECU 71 computes the value of an actual injection amount Qa at step 307. At the next step 308, the ECU 71 computes the value of a reference injection amount Q0 based on the currently read reference bulk modulus E0. The ECU 71 obtains the values of both injection amounts Qa and Q0 by referring to a predetermined map as shown in Fig. 11. In this map, as the values of the bulk modulus AE and E0 increase, the injection amounts Qa and Q0 increase.

At step 309, the ECU 71 computes a final injection timing instruction value TiF from the following equation (7) based on the values of the currently obtained target injection timing Ti and injection start times Tia and Ti0.

$$TiF = Ti - (Tia - Ti0) \tag{7}$$

At step 310, the ECU 71 computes a final injection amount instruction value QF from the following equation (8) based on the values of the currently obtained target injection amount Q and injection amounts Qa and Q0.

$$QF = Q - (Qa - Q0) \tag{8}$$

At the next step 311, the ECU 71 executes injection timing control based on the currently obtained final injection timing instruction value TiF. More specifically, the ECU 71 controls the TCV 33 based on the injection timing instruction value TiF to control the timer apparatus 26. Accordingly, the timing for starting the supply of fuel under pressure to the injection nozzle 4 from the injection pump 1 is adjusted to control the timing for fuel injection from the injection nozzle 4.

Further, the ECU 71 executes fuel injection amount control based on the currently obtained final injection amount instruction value QF at step 312 and then temporarily terminates the subsequent processing. More specifically, the ECU 71 controls the electromagnetic spill valve 23 based on the injection amount instruction value QF to control the timing for ending the supply of fuel under pressure to the injection nozzle 4 from the injection pump 1. Accordingly, the amount of fuel injection from the injection nozzle 4 is controlled. The ECU 71 executes fuel injection control in the above manner.

According to the fuel injection control of this embodiment, as described above, at the time each injection nozzle 4 executes single fuel injection, the bulk modulus AE in the associated fuel line 4a between the injection pump 1 and the injection nozzle 4 is obtained. The injection amount instruction value QF and injection timing instruction value TiF are corrected based on the value of the bulk modulus AE. Based on the injection amount instruction value QF and injection timing instruction value TiF, the injection pump 1 controls the timing and fuel quantity used during fuel injection.

At the time of each fuel injection cycle, therefore, the amount of fuel fed under pressure from the injection pump 1 to each injection nozzle 4 is compensated based on a change in bulk modulus AE, caused by a variation in fuel characteristics such as fuel viscosity. Accordingly, the influence of the bulk modulus AE on the amount of fuel is eliminated. It is therefore possible to supply the proper amount of fuel under pressure from the injection pump 1 to the injection nozzle 4 and inject the fuel from the nozzle 4 at the proper time without being affected by variations in fuel property like fuel viscosity. As a result, high-precision fuel injection volume and timing control is possible. In this respect, it is possible to suppress the discharge of smoke or nitrogen oxides (NOx) from the engine 2.

According to this embodiment, at the beginning of a fuel injection cycle, the value of the fuel pressure P in each fuel line 4a is detected. Based on this detected value of the frequency of pressure fluctuation AF over a predetermined period immediately after the termination of fuel injection from the injection nozzle 4 is obtained. Based on the value of the frequency of pressure fluctuation AF, the bulk modulus AE is acquired.

It is known that immediately after fuel injection is completed, the period of the fluctuation of fuel pressure becomes stable, so that the frequency of pressure fluctuation AF becomes stable with less variation. Thus, the bulk modulus AE obtained based on the stable frequency of pressure fluctuation AF more properly reflects a variation in fuel property including variations in fuel viscosity. This allows for accurate analysis of variations in fuel property. Since the control apparatus disclosed in Japanese Unexamined Patent Publication 62-291453 determines the degree of the fuel viscosity based on a variation speed associated with the timer apparatus, its analysis can not preclude mechanical error associated with the timer apparatus. Fuel viscosity determinations according to this embodiment, however, may be performed without influence from mechanical error. Variations in fuel property can be detected at high precision with respect to the speed of the engine 2 and any load-oriented condition.

Accordingly, a change in fuel property such as fuel viscosity can be detected properly based on the bulk modulus AE. In accordance with the detection of the change, the injection timing instruction value TiF and injection amount instruction value QF can be obtained more accurately. In this respect too, the injection amount control and fuel injection timing control can be executed at high accuracy.

A second embodiment of the present invention as adapted for an electronic controlled diesel engine will now be described with reference to Figs. 12 through 16. For individual embodiments including the second embodiment which will be discussed hereunder, like or same reference numerals will be used for components corresponding to or identical to those of the first embodiment and their detailed descriptions will be omitted.

In this embodiment, the ECU 71 obtains the value of the frequency of pressure fluctuation AF based on the value of the fuel pressure P immediately after the termination of fuel injection, and acquires the value of the bulk modulus AE based on that value, in accordance with the processes in the flowcharts in Figs. 4 to 6, which have already been explained in the foregoing description of the first embodiment.

Using the obtained bulk modulus AE, the ECU 71 performs fuel injection control according to this embodiment as described below. Figs. 12 and 13 each presents the flowchart which illustrates the contents of a "fuel grade determining routine" which the ECU 71 periodically executes in order to determine the grade of fuel to be used in the engine 2.

When the ECU 71 begins this routine at step 401, the ECU 71 reads the values of the engine speed NE, acceleration pedal angle ACCP and starter signal ST based on various signals from the engine speed sensor 35, acceleration pedal sensor 73, starter switch 69, etc.

At the next step 402, the ECU 71 determines if the engine 2 has been started, based on the currently read values of various parameters NE, ACCP and ST. If the engine 2 has not been started, the ECU 71 proceeds to step 403 to perform the processes at steps 403 to 405.

At step 403, the ECU 71 resets a control flag FL to zero. This flag indicates whether a coefficient a and Y-intercept b involved in linear equations which will be described later, is set to "0". Then, the ECU 71 resets a plurality of variables A1 to A4, discussed later, to "0" at step 404. The ECU 71 resets a set number N (to be described later) to "0" at step 405 and temporarily terminates the subsequent processing.

If engine starting operations are complete at step 402, the ECU 71 proceeds to step 406 where the ECU 71 reads the value of the bulk modulus AE, obtained in the above-described separate routine, and reads the value of the fuel temperature THF based on the signal from the fuel temperature sensor 37.

The ECU 71 determines if the value of the fuel temperature THF is lower than "60°C" at step 407. If the fuel temperature THF is lower than "60°C", which means that the warm-up of the engine 2 is not complete, the ECU 71 proceeds to step 408. At step 408, the ECU 71 computes a plurality of variables A1 to A4 from the following equations (9) to (12). The ECU 71 uses those variables A1 to A4 to determine the coefficient a and Y-intercept b.

$$A1 = A1 + THF * THF \tag{9}$$

$$A2 = A2 + THF \tag{10}$$

$$A3 = A3 + THF * AE \tag{11}$$

$$A4 = A4 + AE \tag{12}$$

That is, the individual variables A1-A4 are determined on the basis of the periodic readings of fuel temperature THF and bulk modulus AE.

Next, the ECU 71 increments the set number N by "1" at step 409, and temporarily terminates subsequent processing. The set number N indicates how many times the variables A1-A4 has been computed. This step 409 determines the set number N indicating how many times the variables A1-A4 have been computed until engine warm-up is complete.

If the fuel temperature THF is equal to or higher than "60°C", which means that the warm-up of the engine 2 has been completed, the ECU 71 proceeds to step 410. At step 410, the ECU 71 determines if the control flag FL is "0". When the control flag FL is not "0", which indicates that the coefficient a and Y-intercept b have already been acquired in this routine, the ECU 71 temporarily terminates the subsequent processing. When the control flag FL is "0", which indicates that the coefficient a and Y-intercept b have not been acquired yet in this routine, the ECU 71 moves to step 411.

At step 411, the ECU 71 computes the coefficient "a" from the following equation (13):

$$a = (N * A3 - A2 * A4)/(N * A1 - A2 * A2) \tag{13}$$

Subsequently, at step 412 the ECU 71 computes the Y-intercept b from the following equation (14).

$$b = (A3 - a * A1)/A2 \tag{14}$$

When the coefficient a and Y-intercept b have been computed in the above manner, the ECU 71 sets the control flag FL to "1" at the next step 413.

Further, the ECU 71 computes the values of volume elasticities E20, E40 and E60 to be obtained for each value of the fuel temperature THF at step 414. The bulk modulus E20 indicates a bulk modulus when the fuel temperature THF is "20°C", the bulk modulus E40 indicates a bulk modulus when the fuel temperature THF is "40°C", and the bulk modulus E60 indicates a bulk modulus when the fuel temperature THF is "60°C". The ECU 71 computes those volume elasticities E20, E40 and E60 from the following equations (15) to (17):

$$E20 = a * 20 + b \tag{15}$$

$$E40 = a * 40 + b \tag{16}$$

$$E60 = a * 60 + b \tag{17}$$

That is, the values of the individual bulk modulus E20, E40 and E60 are determined based on the periodically determined coefficient a and Y-intercept b.

Then, the ECU 71 initializes a grade number i indicating the grade of fuel to "1" at step 415. At the next step 416, the ECU 71 sets the value of a minimum decision error ERM to a largest possible predetermined value $\alpha$. Further, the ECU 71 resets a temporal grade number Mi for each fuel grade corresponding to the minimum decision error ER to "0" at step 417.

At the subsequent step 418, the ECU 71 computes the decision error ER associated with each fuel grade from the following equation (18):

$$ER = ABS(E20 - E20T(i))$$

$$+ ABS(E40 - E40T(i))$$

$$+ ABS(E60 - E60T(i)) \tag{18}$$

where E20T(i), E40T(i) and E60T(i) indicate a reference bulk modulus previously obtained for each fuel grade when the fuel temperature THF was "20°C", "40°C" and "60°C", respectively. The equation (18) shows that for each fuel grade, the decision error ER is obtained as the sum of the absolute values of the differences between the bulk modulus and the reference bulk modulus, i.e., between E20 and E20T(i), E40 and E40T(i), and E60 and E60T(i).

At step 419, the ECU 71 determines if the currently calculated decision error ER is smaller than the minimum decision error ERM. When the decision error ER is equal to or greater than the minimum decision error ERM, the ECU 71 proceeds to step 422. When the decision error ER is smaller than the minimum decision error ERM, on the other hand, the ECU 71 proceeds to step 420.

At step 420, the ECU 71 sets the currently acquired decision error ER as the minimum decision error ERM. Then, the ECU 71 sets the value i as a variable Mi for the fuel grade corresponding to that decision error ER as the temporal at step 421.

At step 422 as moved from step 419 or step 421, the ECU 71 increments the grade number i by "1". At the next step 423, the ECU 71 determines if the incremented grade number i is greater than a predetermined number n. When i is equal to or less than n, then the comparison of the decision error ER with the minimum decision error ERM has not been performed for all the fuel grades. When this occurs, the ECU 71 returns to step 418 to repeat the sequence of processes at steps 418 to 423. When the grade number i is larger than the predetermined number of grades n, then the comparison of the decision error ER with the minimum decision error ERM has been performed for all the fuel grades, and the ECU 71 proceeds to step 424.

At step 424, the ECU 71 sets the value of the variable Mi as a final determined number Fi corresponding to the fuel grade to be detected, and temporarily terminates the subsequent processing. That is, the ECU 71 computes the grade number i of the fuel grade which minimizes the decision error ER as the final determined number Fi.

In the above-described manner, the grade of fuel to be used in the fuel injection apparatus is periodically determined based on the values of the fuel temperature THF and the bulk modulus AE. Then, the value Fi corresponding to that fuel grade is determined.

In this embodiment, the ECU 71 uses the value Fi, obtained in the above manner, to execute the fuel injection control. Fig. 15 presents the flowchart which illustrates the contents of a "fuel injection control routine" the ECU 71 periodically executes.

When the ECU 71 begins this routine, the ECU 71 reads values of the engine speed NE and acceleration pedal angle ACCP based on the signals from the engine speed sensor 35 and acceleration pedal sensor 73 at step 510.

At the next step 520, the ECU 71 reads the value of Fi for the fuel grade obtained in the "fuel grade determining routine".

At step 530, the ECU 71 computes the value of a target injection amount Q based on the currently read values of the parameters NE, ACCP and Fi, referring to predetermined maps. In this embodiment, a plurality of predetermined maps for individual final determined numbers Fi as shown in Fig. 16 are stored in advance in the ROM 82. Those maps describe the relation among the engine speed NE, the acceleration pedal angle ACCP and the target injection amount Q for the individual fuel grades. Accordingly, the target injection amount Q is periodically determined under various engine operating conditions and for various fuel grades at step 530.

At step 540, the ECU 71 computes the value of a target injection timing Ti based on the currently read values of the parameters NE, ACCP and Fi. The ECU 71 acquires the target injection timing Ti by referring to maps as done at step 530. That is, the ECU 71 acquires the target injection timing Ti by referring to a plurality of predetermined maps in accordance with each value Fi. At this step 540, therefore, the target Ti according to the driving condition of the engine 2 is obtained in accordance with a variation in fuel grade.

The ECU 71 executes fuel injection amount control based on the currently acquired target injection amount Q at step 550. More specifically, the ECU 71 controls the electromagnetic spill valve 23 based on the target injection amount Q to control the timing for ending the supply of fuel under pressure to the injection nozzle 4 from the injection pump 1, thereby controlling the amount of fuel injection from the injection nozzle 4.

Further, the ECU 71 executes fuel injection timing control based on the currently obtained target injection timing Ti at step 560 and then temporarily terminates the subsequent processing. More specifically, the ECU 71 controls the TCV 33 based on the target injection timing Ti to control the timer apparatus 26. Accordingly, the timing for starting the supply of fuel under pressure to the injection nozzle 4 from the injection pump 1 is adjusted, thus controlling the timing for injecting fuel from the injection nozzle 4. The ECU 71 executes fuel injection control in the above manner.

According to the fuel injection control of this embodiment, as described above, at the time single fuel injection is performed, the value of the fuel pressure P in the passage or fuel line 4a is detected by the pressure sensor 47. Based on the detected value, the frequency of pressure fluctuation AF is computed for the predetermined period immediately after the termination of fuel injection from the injection nozzle 4. Based on the value of the frequency of pressure fluctuation AF, the bulk modulus AE is acquired. Further, the occasional fuel temperature THF is detected by the fuel temperature sensor 37. Then, the fuel grade is determined based on the bulk modulus AE and fuel temperature THF. The target injection amount Q and the target injection timing Ti are obtained in accordance with the determined fuel grade. Based on those target injection amount Q and target injection timing Ti, the injection pump 1 is controlled to execute the fuel injection amount control and the fuel injection timing control.

According to this embodiment, therefore, every time fuel injection is performed, the amount of fuel fed under pressure from the injection pump 1 to each injection nozzle 4 is compensated based on a variation in fuel property including the fuel viscosity, caused by a variation in the grade of fuel to be used. The influence of fuel viscosity on the amount of fuel injected is eliminated. It is therefore possible to feed the proper amount of fuel under pressure from the injection pump 1 to the injection nozzle 4 and inject the fuel from the nozzle 4 regardless of a change in fuel grade. Likewise, fuel can be injected from the injection nozzle 4 at the proper injection start time. As a result, high-precision fuel injection amount control and fuel injection timing control can be executed.

According to this embodiment, as per the first embodiment, the value of the bulk modulus AE is obtained based on the stable frequency of pressure fluctuation AF immediately after the termination of fuel injection from the injection nozzle 4, and the fuel grade is determined based on the acquired value AE. According to this embodiment, as per the first embodiment, no mechanical errors are included in the controls and the fuel grade can be accurately determined with respect to the engine speed and any load-oriented condition. In this respect, the fuel injection amount control and fuel injection timing control can be executed at high accuracy, while more properly reflecting a change in the fuel property caused by a change in fuel grade.

A third embodiment of the present invention as adapted for an electronic controlled diesel engine will now be described with reference to Figs. 17 to 19.

In this embodiment, the ECU 71 executes the fuel injection control in accordance with the processing described below, based on the value of the fuel pressure P for a predetermined period of time immediately after the fuel fed under pressure from the injection pump 1 has been injected from the injection nozzle 4.

Figs. 17 and 18 present the flowchart which illustrates the contents of processing of a "fuel grade determining routine" the ECU 71 executes periodically.

When the ECU 71 enters this routine at step 710 immediately after the injection of fuel from the injection nozzle 4 is terminated, it performs sampling of the second derivative DDP at a time when value DDP equals zero. Since the process at this step 710 is the same as the processes at steps 201 to 223 in the flowchart in Figs. 5 and 6, which has already been explained in the section of the first embodiment, its detailed description will not be given here.

At step 721 after step 710, the ECU 71 initializes data i at the point where the second derivative value DDP is "0". At the next step 722, the ECU 71 treats a zero point time AZ(i), set for the data i, as the first reference value of second count data j which indicates the timing at which the second derivative value DDP reaches a maximum, and increments only the subsequent data j.

Next, the ECU 71 determines at step 723 whether or not the second derivative value DDP(Az(i)+1) at a first sampling point following the zero point time AZ(i) is greater than "0". That is, the ECU 71 determines the polarity of the second derivative value DDP after the second derivative value DDP has become "0" on the premise that the second derivative value DDP fluctuates while changing its polarity around "0" as shown in Fig. 19. When the second derivative value DDP(j) changes to a negative value, the ECU 71 proceeds to step 726. When the second derivative value DDP (j) changes to a positive value, on the other hand, the ECU 71 proceeds to step 724.

At step 724, the ECU 71 determines if the second derivative value DDP(j) corresponding to the value of the data j then is greater than a second derivative value DDP(j+1) immediately following the former value DDP(j). When the second derivative value DDP(j) is equal to or less than the second derivative value DDP(j+1), which means that the second derivative value DDP(j) has not reached the positive peak, the ECU 71 proceeds to step 725. The ECU 71 increments the data j by "1" at step 725 and then returns to step 723 to execute the sequence of processes starting with this step 723. When the second derivative value DDP(j) is greater than the next second derivative value DDP(j+1) at step 724, which means that the second derivative value DDP(j) has reached the positive peak, the ECU 71 proceeds to step 728.

At step 726 moved from step 723, the ECU 71 determines whether the second derivative value DDP(j) corresponding to the value of the data j then is smaller than the second derivative value DDP(j+1) immediately following the former value DDP(j). When the second derivative value DDP(j) is equal to or greater than the second derivative value DDP (j+1), it means that the second derivative value DDP(j) has not reached a minimum, and the ECU 71 proceeds to step 727. The ECU 71 increments the data j by "1" at step 727 and then returns to step 723 to execute the sequence of processes starting with this step 723. When the second derivative value DDP(j) is smaller than the second derivative value DDP(j+1) at step 726, it means that the second derivative value DDP(j) has reached the minimum, and the ECU 71 proceeds to step 728.

At step 728 moved from step 724 or step 726, the ECU 71 sets the second derivative value DDP which has reached the peak value as a peak value APK(i) corresponding to the first count data i.

At the subsequent step 729, the ECU 71 increments the data by "1". Next, the ECU 17 determines at step 730 if the value of the data i is greater than the value of the zero point count data NZ minus "1". When the value of the data i is not greater than NZ - 1, the ECU 71 jumps to step 722 to repeat the processes at steps 722 to 730 in order to continue the detection of the peak value of the second derivative value DDP(j). When the value of the data i is greater than NZ - 1, the ECU 71 proceeds to step 731 to terminate the detection of the peak value of the second derivative value DDP(j).

At step 731, the ECU 71 initializes the data i to "1". Then, the ECU 71 resets the accumulated value, TD to "0" at step 732. Value TD is derived from damping ratio D and relates to the vibration of the fuel pressure, which will be described later.

In the next step 733, the ECU 71 computes the damping ratio D relating to the vibration of the fuel pressure. As shown in Fig. 19, it is known that the fluctuation of the second derivative value DDP gradually attenuates its amplitude after fuel injection. The ECU 71 computes the degree of the attenuation of the amplitude as the damping ratio D from the following equation (23):

$$D = ABS(APK(i+2)-APK(i+1))/ABS(APK(i+1)-APK(i)) \qquad (23)$$

As shown in Fig. 19, taking a peak value APK(i) at one point as a reference value, the ECU 71 acquires the absolute value, ABSa, of the difference between that peak value APK(i) and a first peak value APK(i+1) after APK(i). Further, the ECU 71 acquires the absolute value, ABSb, of the difference between the peak value APK(i+1) and a second peak value APK(i+2) after APK(i). Then, the ECU 71 obtains the ratio of one absolute value ABSa to the other absolute value ABSb as the damping ratio D.

At the next step 734, the ECU 71 adds the currently obtained damping ratio D to the previous accumulated value TD to acquire a new accumulated value TD. Then, the ECU 71 increments the data i by "1" at step 735.

At step 736, the ECU 71 determines if the value of the data i is greater than the value of the data NZ minus "3". When the value of the data i is not greater than NZ - 3, the ECU 71 jumps to step 733 to repeat the processes at steps 733 to 736 in order to continue the computation of the damping ratio D. When the value of the data i is greater than NZ - 3, the ECU 71 proceeds to step 737 to terminate the computation of the damping ratio D.

At step 737, the ECU 71 computes an average damping ratio AD from the following equation (24) based on the accumulated value TD of the damping ratio D.

$$AD = TD/(NZ - 3) \qquad (24)$$

Here the value of (NZ - 3) indicates the number of times the damping ratio D has been obtained.

At step 739, the ECU 71 initializes the data i to "1" at step 738, and then computes the minimum decision error ERM from the following equation (25):

$$ERM = ABS(DMAP(i) - AD) \tag{25}$$

Here DMAP(i) is a reference damping ratio preliminarily obtained for each grade of fuel that is expected to be used, and is stored in advance in the ROM 82. At this step 739, the absolute value of the difference between the reference damping ratio DMAP(i) and the acquired average damping ratio AD as the minimum decision error ERM.

At step 740, the ECU 71 sets the value of the data i then as a temporal grade number Mi. Then, the ECU 71 increments the data i by "1" at step 741.

At step 742, the ECU 71 determines if the value of the data i is greater than a total number of grades NF. When the value of the data i is not greater than the total grade number NF, the ECU 71 proceeds to step 743 to compute the decision error ER from the following equation (26):

$$ER = ABS(DMAP(i) - AD) \tag{26}$$

At step 744, the ECU 71 determines if the currently obtained decision error ER is smaller than the minimum decision error ERM. When the current decision error ER is not smaller than the minimum decision error ERM, the ECU 71 returns to step 741 to execute the sequence of processes starting with this step 741. When the decision error ER is smaller than the minimum decision error ERM, on the other hand, the ECU 71 proceeds to step 745 to set the current decision error ER as the minimum decision error ERM. After setting the value of the current data i as the variable Mi at step 746, the ECU 71 returns to step 741 to execute the sequence of processes starting with this step 741.

When the value of the data i is greater than the total grade number NF at step 742, the ECU 71 sets the value of the variable Mi as a final determined number Fi corresponding to the fuel grade to be obtained at step 747, and temporarily terminates the subsequent processing. That is, the value of the data i associated with the fuel grade which minimizes the decision error ER is obtained as the value Fi.

It is apparent from Fig. 19 that the second derivative value DDP is a damped sinusoid. The reduction of the pressure fluctuation occurs due to the frictional resistance at the time the viscous fuel contacts the inner wall of the fuel line 4a. Therefore, the damping of the pressure fluctuation is proportional to the fuel viscosity then, and this fuel viscosity differs from one fuel grade to another. In this embodiment, therefore, the ECU 71 determines the fuel grade which reflects the difference in the fuel property including the fuel viscosity.

In this embodiment, the ECU 71 executes the fuel injection control according to the same processing as the "fuel injection control routine" of the second embodiment shown in Fig. 15, using the value of the final determined number Fi that is obtained in the above manner.

According to the fuel injection control of this embodiment, therefore, every time single fuel injection is performed, the average damping ratio AD associated with the pressure fluctuation of the fuel is obtained based on the value of the fuel pressure P in the fuel line 4a. Further, the fuel grade is determined based on the average damping ratio AD and the target injection amount Q. Target injection timing Ti are obtained in accordance with the determined fuel grade. Based on the target injection amount Q and target injection timing Ti, the injection pump 1 controls the amount of fuel injection and the fuel injection timing.

Accordingly, this embodiment can act in the same way as the second embodiment and have the same advantages as those of the second embodiment.

Although only three embodiments of the present invention have been described herein, it should be apparent to those skilled in the art that the present invention may be embodied in many other specific forms, it should be understood that this invention may be embodied in the following forms.

According to the first and second embodiments, the fuel injection amount and fuel injection timing are compensated on the basis of the bulk modulus AE or the like obtained from the fluctuation of the fuel pressure. However, various parameters such as EGR may be compensated based on the bulk modulus AE or the like.

Although the pressure sensor 47 for detecting the fuel pressure P is provided midway in the fuel line 4a, the pressure sensor may be provided in the injection nozzle or in the high pressure chamber in the injection pump.

According to the third embodiment, the fuel grade is determined based on the damping ratio D of the fluctuation of the fuel pressure. Fuel injection amount and fuel injection timing are adjusted in accordance with this fuel grade. The fuel injection amount and fuel injection timing may however be compensated directly based on the damping ratio D.

Although the fuel injection apparatus of this invention is adapted for the diesel engine 2 in the above-described embodiments, the present invention can also be applied to other engines than the diesel engine as long as the engines have a fuel injection apparatus equipped with a fuel injection pump and injection nozzles.

## Claims

1. A fuel injection apparatus having a fuel injection pump (1) connected with a plurality of fuel injection nozzles (4) by way of a plurality of fuel passages, said injection pump pumping out a required amount of fuel under high pressure to each injection nozzle through the associated fuel passage at required timing, wherein a sensor (47) detects fuel pressure in each of said fuel passages and control means (71) control the injection pump to correct at least one selected from a group consisting of the fuel injection timing and the amount of fuel to be injected from each of said injection nozzles to an engine, said injection apparatus being characterized by

   first computing means for computing fluctuation of fuel pressure detected by the sensor (47) after the fuel injecti-on is terminated; and
   said control means (71) controlling the injection pump in accordance with a parameter (AE, AD) relating to the fluctuation of fuel pressure.

2. A fuel injection apparatus according to claim 1 further comprising:

   correction means for correcting the amount of the fuel to be injected and/or the injection timing in accordance with the computed fluctuation, said correcting means actuating the control means based on the corrected value.

3. A fuel injection apparatus according to claim 1 further comprising:

   second computing means for computing bulk modulus of the fuel in accordance with the computed fluctuation of the fuel pressure; and
   correction means for correcting the amount of the fuel to be injected and/or the injection timing in accordance with the computed bulk modulus, said correction means actuating the control means based on the corrected value.

4. A fuel injection apparatus according to claim 3, wherein first computing means computes variation ratio of the fuel pressure during the time between pumping out and injection of the fuel.

5. A fuel injection apparatus according to claim 1 further comprising:

   second computing means for computing a difference in values of the fluctuating fuel pressure at the end of a fuel injection cycle; and
   correction means for correcting the amount of the fuel to be injected and/or the injection timing in accordance with the computed fuel pressure difference, said correction means actuating the control means based on the corrected value.

6. A fuel injection apparatus according to claim 1 further comprising:

   memory means for storing a predetermined fluctuation of pressure in the fuel passage at the time of injection end;
   determining means for determining the end time of the fuel injection when the computed fluctuation and stored fluctuation are identical to each other; and
   correction means for correcting the amount of the fuel to be injected and/or the injection timing in accordance with the value determined by the determining means, said correction means actuating the control means based on the corrected value.

7. A fuel injection apparatus according to claim 1, further comprising:

   second computing means for computing periodic frequency of the fluctuation of the fuel pressure in accordance with the value computed by the first computing means;
   determining means for determining the end time of the fuel injection when the periodic frequencies are substantially identical to one another, and
   correction means for correcting the end timing of the injection in accordance with the value determined by the determining means, said correction means actuating the control means based on the corrected value.

8. A fuel injection apparatus according to claim 1 further comprising:

memory means for storing a predetermined natural frequency of vibration peculiar to each injector nozzle injecting the fuel; and

determining means for determining the end timing of the fuel injection when the computed fluctuation and stored natural frequency are identical to each other; and

correction means for correcting the amount of the fuel to be injected and/or the injection timing in accordance with the value determined by the determining means, said correction means actuating the control means based on the corrected value.

9. A fuel injection apparatus according to any one of the preceding claims, wherein said injection pump including a plunger capable of rotating and reciprocating to distribute the fuel to each injection nozzle through the associated fuel passage.

10. A fuel injection apparatus according to any one of the preceding claims, wherein said injection pump includes an electromagnetic spill valve controlled by the control means to adjust the amount of the fuel to be injected by each injection nozzle.

11. A fuel injection apparatus according to any one of the preceding claims, wherein said injection pump includes a timer controlled by the control means to adjust the injection timing of each injection nozzle.

12. A fuel injection apparatus according to any one of the preceding claims, wherein said sensor means includes a pressure sensor disposed in each fuel passage.

13. A fuel injection apparatus according to any one of the preceding claims, wherein said first computing means is arranged to compute a second differential and the fluctuation of the fuel pressure based on the computed second differential.

**Patentansprüche**

1. Kraftstoffeinspritzvorrichiung mit einer Kraftstoffeinspritzpumpe (1), die über eine Vielzahl von Kraftstoffleitungen mit einer Vielzahl von Kraftstoffeinspritzdüsen (4) verbunden ist, wobei die Einspritzpumpe einen erforderlichen Betrag von Kraftstoff unter hohem Druck an jede Einspritzdüse über die zugeordnete Kraftstoffleitung zum erforderlichen Timing herauspumpt, wobei ein Sensor (47) den Kraftstoffdruck in jeder der Kraftstoffleitungen erfaßt und eine Steuerungseinrichtung (71) die Einspritzpumpe steuert, um wenigstens eine aus einer Gruppe ausgewählte Größe zu Korrigieren, wobei die Gruppe aus dem Kraftstoffeinspritztiming und dem Betrag von Kraftstoff besteht, der in einen Motor aus jeder der Einpritzdüsen einzuspritzen ist, wobei die Einsprintzvorrichtungen gekennzeichnet ist durch

eine erste Berechnungseinrichtung zum Berechtnen des Kraftstoffdrucks, der durch den Sensor (47) nach Beendigung der Kraftstoffeinspritzung erfaßt wird; wobei

die Steuerungseinrichtung (71) due Einspritzpumpe in Abhängigkeit eines Parameters (AE, AD) steuert, der in Relation zur Schwankung des Kraftstoffdrucks steht.

2. Kraftstoffeinspritzvorrichtung nach Anspruch 1 mit weiterhin:

einer Korrektureinrichtung zum Korrigieren des einzuspritzenden Kraftstoffbetrags und/oder des Einspritztimings in Abhängigkeit von der berechneten Schwankung, wobei die Korrektureinrichtung die Steuerungseinrichtung basierend auf dem korrigierten Wert betätigit.

3. Kraftstoffeinspritzvorrichtung nach Anspruch 1 mit weiterhin:

einer zweiten Berechnungseinrichtung zum Berechnen eines Massenkoeffizienten des Kraftstoffs in Abhängigkeit der berechneten Schwankung des Kraftstoffdrucks; und

einer Korrektureinrichtung zum Korrigieren des einzuspritzenden Kraftstoffbetrags und/oder des Einspritztimings in Abhängigkeit vom berechneten Massenkoeffizienten, wobei die Korrektureinrichtung die Steuerungseinrichtung basierend auf dem korrigierten Wert betätigt.

4. Kraftstoffeinspritzvorrichtung nach Anspruch 3,
**dadurch gekennzeichnet, daß**
die Berechnngseinrichtung eine Änderungsrate des Kraftstoffdrucks während der Zeit zwischen dem Herauspumpen und Einspritzen des Kraftstoffs berechnet.

5. Kraftstoffeinspritzvorrichtung nach Anspruch 1, mit weiterhin:

einer zweiten Berechnungseinrichtung zum Berechnen einer Differenz der Werte des schwankenden Kraftstoffdrucks am Ende des Kraftstoffeinspritzzyklus; und
einer Korrektureinrichtung zum Korrigieren des einzuspritzenden Kraftstoffbetrags und/oder oder des Einspritztimings in Abhängigkeit von der berechneten Kraftstoffdruckdifferenz, wobei die Korrektureinrichtung die Steuerungseinrichtung basierend auf dem korrigierten Wert betätigt.

6. Kraftstoffeinspritzvorrichtung nach Anspruch 1 mit weiterhin:

einer Speichereinrichtung zum Speichern einer vorbestimmten Schwankung des Drucks in der Kraftstoffleitung zum Zeitpunkt des Einspritzendes;
einer Bestimmungseinrichtung zum Bestimmen der Endungszeit der Kraftstoffeinspritzung, wenn die berechnete Schwankung und die gespeicherte Schwankung zueinander gleich sind; und
einer Korrektureinrichtung zum Korrigieren des einzuspritzenden Kraftstoffbetrags und/oder des Einspritztimings in Abhängigkeit von dem Wert, der durch die Bestimmungseinrichtung bestimmt wird, wobei die Korrektureinrichtung die Steuerungseinrichtung basierend auf dem korrigierten Wert betätigt.

7. Kraftstoffeinspritzvorrichtung nach Anspruch 1, mit weiterhin :

einer zweiten Berechnungseinrichtung zum Berechnen der periodischen Frequenz der Schwankung des Kraftstoffdrucks in Abhängigkeit von dem Wert, der durch die erste Berechnungseinrichtung berechnet wird;
einer Bestimmungseinrichtung zum Bestimmen der Endungszeit der Kraftstoffeinspritzung, wenn die periodischen Frequenzen im wesentlichen gleich zueinander sind, und
einer Korrektureinrichtung zum Korrigieren der Anderungszeit der Einspritzung in Abhängigkeit von dem Wert, der durch die Bestimmungseinrichtung bestimmt ist, wobei die Korrektureinrichtung die Steuerungseinrichtung basieren auf dem korrigierten Wert betätigt.

8. Kraftstoffeinspritzvorrichtung nach Anspruch 1 mit weiterhin:

einer Speichereinrichtung zum Speichern einer vorbestimmten natürlichen Schwingungsfrequenz, die für jede den Kraftstoff einspritzende Einspritzdüse eingentümlich ist; und
einer Bestimmungseinrichtung zum Bestimmen der Endungszeit der Kraftstoffeinspritzung, wenn die berechnete Schwankung und die gespeicherte natürliche Frequenz zueinander gleich sind; und
einer Korrektureinrichtung zum Berechnen des einzuspritzenden Kraftstoffbetrags und/oder des Einspritztimings in Abhängigkeit von dem Wert, der durch die Bestimmungseinrichtung bestimmt ist, wobei die Korrektureinrichtung die Steuerungseinrichtung basierend auf dem korrigierten Wert betätigt.

9. Kraftstoffeinspritzvorrichtung nach einem der vorstehenden Ansprüche,
**dadurch gekennzeichnet, daß**
die Einspritzpumpe einen Kolben hat, der in der Lage ist, sich zu drehen und hin und her zu bewegen, um den Kraftstoff an jede Einspritzdüse über die zugeordnete Kraftstoffleitung zu verteilen.

10. Kraftstoffeinspritzvorrichtung nach einem der vorstehenden Ansprüche,
**dadurch gekennzeichnet, daß**
die Einspritzpumpe ein elektromagnetisches Überströmventil hat, das durch die Steuerungseinrichtung gesteuert wird, um den über jede Einspritzdüse einzuspritzenden Kraftstoffbetrag einzustellen.

11. Kraftstoffeinspritzvorrichtung nach einem der vorstehenden Ansprüche,
**dadurch gekennzeichnet, daß**

die Einspritzpumpe einen Timer hat, der durch die Steuerungseinrichtung gesteuert wird, um das Einspritztiming einer jeden Einspritzdüse einzustellen.

12. Krafstoffeinspritzvorrichtung nach einem der vorstehenden Ansprüche,
**dadurch gekennzeichnet, daß**
die Sensoreinrichtung einen Druchsensor hat, der in jeder Kraftstoffleitung angeordnet ist.

13. Kraftstoffeinspritzvorrichtung nach einem der vorstehenden Ansprüche,
**dadurch gekennzeichnet, daß**
die erste Berechnungseinrichtung angeordnet ist, um ein zweites Differential und die Schwankung des Kraftstoffdrucks basierend auf dem berechneten zweiten Differential zu berechnen.

## Revendications

1. Dispositif d'injection de carburant comportant une pompe d'injection de carburant (1) reliée à une pluralité d'injecteurs de carburant (4) au moyen d'une pluralité de passages de carburant, ladite pompe d'injection refoulant une quantité voulue de carburant sous haute pression vers chaque injecteur par l'intermédiaire du passage de carburant associé suivant un cadencement voulu, dans lequel un capteur (47) détecte la pression de carburant dans chacun desdits passages de carburant, et un moyen de commande (71) commande la pompe d'injection afin de corriger au moins un élément choisi parmi le groupe composé de la durée de l'injection de carburant et la quantité de carburant devant être injectée à partir de chacun desdits injecteurs dans un moteur, ledit dispositif d'injection étant caractérisé par

un premier moyen de calcul destiné à calculer la fluctuation de la pression de carburant détectée par le capteur (47) après que l'injection de carburant soit terminée, et
ledit moyen de commande (71) commandant la pompe d'injection en fonction d'un paramètre (AE, AD) se rapportant à la fluctuation de pression du carburant.

2. Dispositif d'injection de carburant selon la revendication 1, comprenant en outre :

un moyen de correction destiné à corriger la quantité du carburant qui doit être injectée et/ou la durée de l'injection en fonction de la fluctuation calculée, ledit moyen de correction actionnant le moyen de commande sur la base de la valeur corrigée.

3. Dispositif d'injection de carburant selon la revendication 1, comprenant en outre :

un second moyen de calcul destiné à calculer le module de compressibilité du carburant conformément à la fluctuation calculée de la pression du carburant, et
un moyen de correction destiné à corriger la quantité du carburant qui doit être injectée et/ou la durée de l'injection conformément au module de compressibilité calculé, ledit moyen de correction actionnant le moyen de commande sur la base de la valeur corrigée.

4. Dispositif d'injection de carburant selon la revendication 3, dans lequel le premier moyen de calcul calcule le taux de variation de la pression de carburant pendant la durée séparant la sortie du carburant de la pompe et son injection.

5. Dispositif d'injection de carburant selon la revendication 1, comprenant en outre :

un second moyen de calcul destiné à calculer une différence de valeurs de la pression de carburant fluctuante à la fin d'un cycle d'injection de carburant, et
un moyen de correction destiné à corriger la quantité du carburant qui doit être injectée et/ou la durée de l'injection conformément à la différence de pression de carburant calculée, ledit moyen de correction actionnant le moyen de commande sur la base de la valeur corrigée.

6. Dispositif d'injection de carburant selon la revendication 1, comprenant en outre :

un moyen de mémoire destiné à mémoriser une fluctuation de pression prédéterminée dans le passage de carburant à l'instant de la fin de l'injection,

un moyen de détermination destiné à déterminer l'instant de fin de l'injection de carburant lorsque la fluctuation calculée et la fluctuation mémorisée sont identiques l'une à l'autre, et

un moyen de correction destiné à corriger la quantité du carburant qui doit être injectée et/ou la durée de l'injection conformément à la valeur déterminée par le moyen de détermination, ledit moyen de correction actionnant le moyen de commande sur la base de la valeur corrigée.

7. Dispositif d'injection de carburant selon la revendication 1, comprenant en outre :

un second moyen de calcul destiné à calculer une fréquence périodique de la fluctuation de la pression de carburant conformément à la valeur calculée par le premier moyen de calcul,

un moyen de détermination destiné à déterminer l'instant de fin de l'injection de carburant lorsque les fréquences périodiques sont pratiquement identiques l'une à l'autre, et

un moyen de correction destiné à corriger la durée de fin de l'injection conformément à la valeur déterminée par le moyen de détermination, ledit moyen de correction actionnant le moyen de commande sur la base de la valeur corrigée.

8. Dispositif d'injection de carburant selon la revendication 1, comprenant en outre :

un moyen de mémoire destiné à mémoriser une fréquence de vibration propre prédéterminée particulière à chaque injecteur injectant le carburant, et

un moyen de détermination destiné à déterminer l'instant de fin de l'injection de carburant lorsque la fluctuation calculée et la fréquence propre mémorisée sont identiques l'une à l'autre, et

un moyen de correction destiné à corriger la quantité du carburant qui doit être injectée et/ou la durée de l'injection conformément à la valeur déterminée par le moyen de détermination, ledit moyen de correction actionnant le moyen de commande sur la base de la valeur corrigée.

9. Dispositif d'injection de carburant selon l'une quelconque des revendications précédentes, dans lequel ladite pompe d'injection comprend un plongeur pouvant effectuer une rotation et un mouvement de va-et-vient afin de distribuer le carburant vers chaque injecteur par l'intermédiaire du passage de carburant associé.

10. Dispositif d'injection de carburant selon l'une quelconque des revendications précédentes, dans lequel ladite pompe d'injection comprend une soupape de décharge électromagnétique, commandée par le moyen de commande afin de régler la quantité du carburant qui doit être injectée par chaque injecteur.

11. Dispositif d'injection de carburant selon l'une quelconque des revendications précédentes, dans lequel ladite pompe d'injection comprend un compteur de temps commandé par le moyen de commande de façon à régler la durée d'injection de chaque injecteur.

12. Dispositif d'injection de carburant selon l'une quelconque des revendications précédentes, dans lequel ledit moyen de capteur comprend un capteur de pression disposé dans chaque passage de carburant.

13. Dispositif d'injection de carburant selon l'une quelconque des revendications précédentes, dans lequel ledit premier moyen de calcul est agencé de façon à calculer une dérivée seconde, ainsi que la fluctuation de la pression de carburant sur la base de la dérivée seconde calculée.

# Fig. 1

EP 0 651 150 B1

EP 0 651 150 B1

# Fig. 2

22

# Fig. 3

| | | |
|---|---|---|
| 72 | Air Temperature Sensor | → Buffer ～88 |
| 73 | Acceleration Pedal Sensor | → Buffer ～89 |
| 74 | Manifold Pressure Sensor | → Buffer ～90 |
| 75 | Coolant Temperature Sensor | → Buffer ～91 |
| 47 | Pressure Sensor | → Buffer ～92 |
| 37 | Fuel Temperature Sensor | → Buffer ～93 |
| 35 | Engine Speed Sensor | |
| 76 | Crank Angle Sensor | Wave Shaping Circuit ～96 |
| 77 | Vehicle Speed Sensor | |
| 69 | Starter Switch | Buffer ～97 |
| 23 | Electromagnetic Spill Valve | Driver ～98 |
| 33 | TCV | Driver ～99 |
| 46 | Glow Plug | Driver ～100 |
| 58 | EVRV | Driver ～101 |
| 64 | VSV | Driver ～102 |
| 65 | VSV | Driver ～103 |
| 66 | Alarm Lamp | Driver ～104 |

Multiplexer 94  A/D Converter 95  Input Interface ～85

～71

Buckup RAM 84

RAM ～83

ROM ～82

～87

CPU ～81

CK  CLOCK

Output Interface ～86

EP 0 651 150 B1

# Fig. 4

```
      Counting Routine

         Sample P          ~110

      Store P(i) in RAM     ~120

          RETURN
```

# Fig. 5

```
         Fuel Bulk Modulus
         Computing Routine

201              i←1

202         Read P(i),
          P(i+1) and P(i-1)

203    Compute and store DDP(i)

204            i←i+1

205            i>m?          NO
                │YES
206            i←1

207          Read P(i)

208          P(i)≧P1?        YES
                │NO
209            i←i+1
```

```
210            STi←i

211            i←STi

212          Read P(i)

213          P(i)<P1?        YES
                │NO
214            i←i+1

215            ENi←i

216            NZ←0

217            i←ENi

               (1)
```

# FIg. 6

1

Read DDP(i) and DDP(i+1) ~218

DDP(i)*DDP(i+1)>0? ~219

NO → NZ←NZ+1 ~221

AZ(NZ)←i+1 ~222

NZ≥NZmax? ~223

YES → i←i+1 ~220

NO

SW←0 ~224

j←1 ~225

Compute W ~226

SW←SW+W ~227

j←j+1 ~228

j>NZ−2? ~229

NO

YES

Compute AW ~230

Compute AF ~231

Compute AA ~232

Compute AE ~233

RETURN

# Fig. 7

```
        ╭─────────────────────╮
        │   Fuel Injection     │
        │  Control Routine     │
        ╰─────────────────────╯
                  │
                  ▼
        ┌─────────────────────┐
        │   Read NE, ACCP,    │~301
        │   PiM, THW, AE, etc. │
        └─────────────────────┘
                  │
                  ▼
        ┌─────────────────────┐
        │  Compute Q based on │~302
        │ NE, ACCP, PiM, THW, etc. │
        └─────────────────────┘
                  │
                  ▼
        ┌─────────────────────┐
        │  Compute Ti based on │~303
        │ NE, ACCP, PiM, THW, etc. │
        └─────────────────────┘
                  │
                  ▼
        ┌─────────────────────┐
        │  Compute EO based on │~304
        │     NE and ACCP      │
        └─────────────────────┘
                  │
                  ▼
        ┌─────────────────────┐
        │ Compute Tia based on AE │~305
        └─────────────────────┘
                  │
                  ▼
        ┌─────────────────────┐
        │ Compute TiO based on EO │~306
        └─────────────────────┘
                  │
                  ▼
        ┌─────────────────────┐
        │ Compute Qa based on AE │~307
        └─────────────────────┘
                  │
                  ▼
        ┌─────────────────────┐
        │ Compute QO based on EO │~308
        └─────────────────────┘
                  │
                  ▼
        ┌─────────────────────┐
        │     Compute TiF      │~309
        └─────────────────────┘
                  │
                  ▼
        ┌─────────────────────┐
        │     Compute QF       │~310
        └─────────────────────┘
                  │
                  ▼
        ┌─────────────────────┐
        │  Injection timing    │~311
        │ control based on TiF │
        └─────────────────────┘
                  │
                  ▼
        ┌─────────────────────┐
        │  Injection amount    │~312
        │ control based on QF  │
        └─────────────────────┘
                  │
                  ▼
        ╭─────────────────────╮
        │       RETURN         │
        ╰─────────────────────╯
```

# FIg. 8

(d) Fuel Injection Rate

Large / Small

Injection Period

(c) Second Derivative Value (DDP)

+ / 0 / −

Computing Period

(b) First Drivative Value (DP)

0

(a) Fuel Pressure (P)

Large / 0

Time

Injection Start Time

Injection End Time

# F I g. 9

# F I g. 10

# F I g. 11

# FIg. 12

```
        ╭─────────────────────╮
        │    Fuel Grade       │
        │ Determining Routine │
        ╰─────────────────────╯
                  │
                  ▼
        ┌─────────────────┐
        │    Read  NE,    │ ~401
        │  ACCP, ST, etc. │
        └─────────────────┘
                  │
                  ▼                  ~402
            ╱─────────────╲      YES
           ╱ Engine start  ╲────────────┐
           ╲ completed?    ╱            │
            ╲─────────────╱             │
                  │ NO  ~403            ▼
                  ▼              ┌──────────────────┐
        ┌─────────────────┐     │  Read AE and THF │ ~406
        │     FL←0        │     └──────────────────┘
        └─────────────────┘            │
                  │  ~404              ▼          ~407
                  ▼              ╱─────────────╲     NO
        ┌─────────────────┐     ╱   THF<60?    ╲────────────┐
        │    A1~A4←0      │     ╲               ╱           │
        └─────────────────┘      ╲─────────────╱            │
                  │  ~405              │ YES                │
                  ▼              ┌──────────────────┐       │
        ┌─────────────────┐     │ Compute A1 to A4 │ ~408  │
        │      N←0        │     └──────────────────┘       │
        └─────────────────┘            │                   │
                  │                    ▼                   │
                  │              ┌──────────────────┐       │
                  │              │     N←N+1        │ ~409  │
                  │              └──────────────────┘       │
                  │                    │                   │
                  │◄───────────────────┘                   │
                  │                                         │
                  │                    ┌────────────────────┘
                  │                    ▼              ~410
                  │  NO         ╱─────────────╲
                  │◄────────────╲   FL=0?      ╱
                  │             ╲               ╱
                  │              ╲─────────────╱
                  │                    │ YES
                  │                    ▼
                  │              ┌─────────────┐
                  │              │  Compute  a │ ~411
                  │              └─────────────┘
                  │                    │
                  │                    ▼
                  │              ┌─────────────┐
                  │              │  Compute  b │ ~412
                  │              └─────────────┘
                  │                    │
                  │                    ▼
                  │              ┌─────────────┐
                  │              │    FL←1     │ ~413
                  │              └─────────────┘
                  │                    │
                  │                    ▼
                  │              ┌──────────────┐
                  │              │ Compute E20, │ ~414
                  │              │ E40 and E60  │
                  │              └──────────────┘
                  ▼                    ▼
                ( 2 )                ( 3 )
```

# FIg. 13

```
        (3)
         │
         ▼
┌─────────────────┐
│      i←1        │──415
└─────────────────┘
         │
         ▼
┌─────────────────┐
│     ERM←α       │──416
└─────────────────┘
         │
         ▼
┌─────────────────┐
│      Mi←0       │──417
└─────────────────┘
         │
         ▼
┌─────────────────┐
│   Compute ER    │──418
└─────────────────┘
         │
         ▼         ──419
      ◇ ER<ERM? ◇────── NO ──┐
         │                   │
         ▼ YES               │
┌─────────────────┐          │
│     ERM←ER      │──420     │
└─────────────────┘          │
         │                   │
         ▼                   │
┌─────────────────┐          │
│      Mi←i       │──421     │
└─────────────────┘          │
         │◄──────────────────┘
         ▼
┌─────────────────┐
│     i←i+1       │──422
└─────────────────┘
         │         ──423
  NO ◄── ◇  i>n  ◇
         │
         ▼ YES
┌─────────────────┐
│     Fi←Mi       │──424
└─────────────────┘
  (2)────►│
         ▼
   ( RETURN )
```

# Fig. 14

# Fig. 15

```
  Fuel Injection
 Control Routine
        │
        ▼
┌─────────────────────┐
│ Read NE and ACCP    │~510
└─────────────────────┘
        │
        ▼
┌─────────────────────┐
│     Read Fi         │~520
└─────────────────────┘
        │
        ▼
┌─────────────────────┐
│ Compute Q based on  │~530
│  NE, ACCP and Fi    │
└─────────────────────┘
        │
        ▼
┌─────────────────────┐
│ Compute Ti based on │~540
│  NE, ACCP and Fi    │
└─────────────────────┘
        │
        ▼
┌─────────────────────┐
│ Injection amount    │~550
│ control based on Q  │
└─────────────────────┘
        │
        ▼
┌─────────────────────┐
│ Injection timing    │~560
│ control based on Ti │
└─────────────────────┘
        │
        ▼
     RETURN
```

# Fig. 16

# Fig. 17

```
      ┌─────────────────────────┐
      │      Fuel Grade         │
      │  Determining Routine    │
      └─────────────────────────┘
                 │
                 ▼
   ╔═══════════════════════════════╗
   ║  Sample at point immediately  ║ ~710
   ║after fuel injection DDP becomes 0║
   ╚═══════════════════════════════╝
                 │
                 ▼
      ┌─────────────────────┐
      │        i←1          │ ~721
      └─────────────────────┘
                 │
                 ▼
      ┌─────────────────────┐
      │      j←AZ (i)       │ ~722
      └─────────────────────┘
                 │
                 ▼
              ~723
       ◇ DDP (AZ (i) +1) >0? ◇──── NO ────┐
                 │                         │
               YES                         ▼
                 │           ~726
                 ▼       ◇ DDP (j) <DDP (j+1) ? ◇── YES ──┐
            ~724                │                          │
       ◇ DDP (j) >DDP (j+1) ? ◇── YES        NO  ~727     │
                 │              │             │            │
               NO  ~725         │    ┌─────────────────┐  │
      ┌─────────────────┐       │    │     j←j+1       │  │
      │     j←j+1       │       │    └─────────────────┘  │
      └─────────────────┘       │                         │
                 │              │                         │
                 ▼              ▼                         │
              ┌──────────────────────────────────────────┘
              ▼
      ┌─────────────────────┐
      │  APK (i) ←DDP (j)   │ ~728
      └─────────────────────┘
                 │
                 ▼
      ┌─────────────────────┐
      │       i←i+1         │ ~729
      └─────────────────────┘
                 │
                 ▼
              ~730
   NO   ◇     i>NZ−1      ◇
   │             │
   │           YES
   │             ▼
   │   ┌─────────────────────┐
   │   │        i←1          │ ~731
   │   └─────────────────────┘
   │             │
   │             ▼
   │   ┌─────────────────────┐
   │   │       TD←0          │ ~732
   │   └─────────────────────┘
   │             │
   │             ▼
   │            ( 4 )
```

# Fig. 18

```
           ( 4 )
             │
             ▼              ~733
     ┌─────────────────┐
     │   Compute  D    │
     └─────────────────┘
             │              ~734
     ┌─────────────────┐
     │    TD←TD+D       │
     └─────────────────┘
             │              ~735
     ┌─────────────────┐
     │     i←i+1        │
     └─────────────────┘
             │              ~736
           ◇ i>NZ-3? ◇ ──NO──►
             │ YES
             │              ~737
     ┌─────────────────┐
     │   Compute  AD   │
     └─────────────────┘
             │              ~738
     ┌─────────────────┐
     │      i←1         │
     └─────────────────┘
             │              ~739
     ┌─────────────────┐
     │   Compute ERM   │
     └─────────────────┘
             │              ~740
     ┌─────────────────┐
     │     Mi←i         │
     └─────────────────┘


                        ~741
     ┌─────────────────┐
     │     i←i+1        │
     └─────────────────┘
             │              ~742
           ◇ i>NF? ◇ ──YES──►
             │ NO           ~743
     ┌─────────────────┐
     │   Compute  ER   │
     └─────────────────┘
             │              ~744
           ◇ ER<ERM? ◇ ──NO──►
             │ YES          ~745
     ┌─────────────────┐
     │     ERM←ER       │
     └─────────────────┘
             │              ~746
     ┌─────────────────┐
     │     Mi←i         │
     └─────────────────┘


     ┌─────────────────┐
     │     Fi←Mi        │  ~747
     └─────────────────┘
             │
        (  RETURN  )
```

# FIg. 19

# FIg. 20

EP 0 651 150 B1

Computer